(19) Europäisches Patentamt
European Patent Office
Office européen des brevets

(11) **EP 2 676 802 B1**

(12) **EUROPÄISCHE PATENTSCHRIFT**

(45) Veröffentlichungstag und Bekanntmachung des Hinweises auf die Patenterteilung:
**16.09.2015 Patentblatt 2015/38**

(51) Int Cl.:
**B42D 25/328** (2014.01)

(21) Anmeldenummer: **13173042.6**

(22) Anmeldetag: **20.06.2013**

(54) **Sicherheitselement mit diffraktiver Struktur**

Security element with diffractive structure

Elément de sécurité à structure diffractive

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2012 DE 102012105444**

(43) Veröffentlichungstag der Anmeldung:
**25.12.2013 Patentblatt 2013/52**

(73) Patentinhaber: **OVD Kinegram AG**
**6301 Zug (CH)**

(72) Erfinder:
• **Tompkin, Wayne Robert**
**5400 Baden (CH)**

• **Mader, Sebastian**
**6003 Luzern (CH)**
• **Walter, Harald**
**8810 Horgen (CH)**

(74) Vertreter: **Louis Pöhlau Lohrentz**
**Patentanwälte**
**Postfach 30 55**
**90014 Nürnberg (DE)**

(56) Entgegenhaltungen:
**DE-A1-102007 063 275**

• **RUDOLF VAN RENESSE: "OPTICAL DOCUMENT SECURITY (THIRD EDITION)", 2005, ARTECH HOUSE, BOSTON / LONDON, XP002714082, ISBN: 1-58053-258-6 * Seite 198 ***

**Beschreibung**

Die Erfindung betrifft ein Sicherheitselement, insbesondere in Form einer Transferfolie, einer Laminierfolie oder eines Sicherheitsfadens, mit einer oder mehreren Schichten, von denen zumindest eine erste Schicht eine diffraktive Struktur bereitstellt. Sie betrifft auch ein Sicherheitsdokument mit einem solchen Sicherheitselement. Sie betrifft ferner auch ein Verfahren zur Herstellung eines Sicherheitselements.

Mit Hilfe einer diffraktiven Struktur lassen sich Bilder in der Nullten, das heißt in direkter Reflexion, oder der Ersten Beugungsordnung, das heißt außerhalb der direkten Reflexion, bereitstellen. Solche Bilder, insbesondere in Form von holographischen Bildern oder Hologrammen, werden bei Sicherheitselementen eingesetzt, um einen besonders guten Schutz vor Fälschungen zu schaffen. Sie werden auf Sicherheitsdokumenten wie Banknoten, Kreditkarten, Passdokumenten, Personalausweisen etc. eingesetzt, um eine Nachahmung zu erschweren. Sicherheitselemente mit diffraktiver Struktur können auch in eine Kreditkarte, in ein Passdokument, einen Personalausweis etc. im Rahmen eines Schichtaufbaus integriert sein. Aufkleber mit Hologrammen befinden sich auf zu schützenden kommerziellen Produkten oder Waren. Auch Verpackungen von zu schützenden kommerziellen Produkten oder Waren werden mit Hologrammen versehen, als Fälschungsschutz und/oder als Dekorationselement.

Ein Sicherheitselement in Form einer Transferfolie dient dazu, eine sog. Transferlage, vorliegend mit der diffraktiven Struktur, auf ein Substrat zu übertragen. Dies wäre beispielsweise ein Substrat einer Banknote, Kreditkarte etc. Ein Sicherheitselement in Form einer Laminierfolie mit einer diffraktiven Struktur lässt sich in ein Laminat integrieren, um ein Sicherheitsdokument bereitzustellen. Ein Sicherheitselement in Form eines Sicherheitsfadens lässt sich in eine Banknote integrieren, aber auch in andere Dokumente wie Passdokumente oder Personalausweise. Das Sicherheitselement kann gleichzeitig die Funktion eines Dekorelements haben, wenn neben dem eigentlichen Sicherheitsaspekt auch ein ästhetischer Aspekt eine Rolle spielt.

Typischerweise wird ein durch eine diffraktive Struktur bereitgestelltes Bild unter einem Betrachtungswinkel senkrecht zu einer Papier- oder Bildebene (also in Richtung einer Flächennormalen zu einer von der Schicht mit der diffraktiven Struktur definierten Grundebene) betrachtet.

Hierbei muss in einem vorbestimmten Einfallswinkel, beispielsweise von 45°, Licht eingestrahlt werden. Das Bild kann ein Beugungsbild Nullter oder Erster Ordnung sein. Vorliegend geht es um die Bereitstellung eines Beugungsbilds Erster Ordnung.

Holographische oder sonstige durch eine diffraktive Struktur bereitgestellte Bilder können insbesondere auch Echtfarbenbilder sein, d. h. bei Betrachtung unter einem vorbestimmten Betrachtungswinkel und bei Beleuchtung unter einem anderen vorbestimmten Einfallswinkel können sie die Farben einer Vorlage nahezu wie gewünscht wiedergeben. Ein solches holographisches Echtfarbenbild wird beispielsweise aus einer Mehrzahl von Bildpunktbereichen zusammengesetzt, die jeweils einen bestimmten Farbeindruck bewirken. In den Bildpunktbereichen sind Beugungsgitter bereitgestellt. Die Spatialfrequenz der Beugungsgitter ist hierbei von der gewünschten Farbe des Bildpunktbereiches abhängig.

Unter den genannten Bedingungen der Betrachtung in Richtung der Flächennormalen bei Beleuchtung unter 45° und bei einem Hologramm als Beugungsbild erster Ordnung liegt die typische Spatialfrequenz, insbesondere für Gitter, die die Primär-Farben Rot, Grün und Blau wiedergeben sollen, zwischen 650 nm und 1000 nm.

Auch Fälschern ist es in zunehmendem Maße möglich, Gitter mit solchen Spatialfrequenzen bzw. Gitterzahlen herzustellen. Insbesondere frei erhältliche Dot-Matrix-Maschinen können derartige Gitter herstellen.

DE 10 2007 063 275 A1 offenbart den Oberbegriff des Anspruchs 1.

Die Aufgabe der vorliegenden Erfindung besteht darin, die Fälschung eines Sicherheitselements der eingangs genannten Gattung, welches ein erstes Bild bereitstellt, zu erschweren.

Die Aufgabe wird durch ein Sicherheitselement mit den Merkmalen gemäß Patentanspruch 1 und durch ein Sicherheitsdokument mit den Merkmalen gemäß Patentanspruch 10 sowie ein Verfahren zur Herstellung eines Sicherheitselements mit den Merkmalen gemäß Patentanspruch 11 gelöst.

Das erfindungsgemäße Sicherheitselement, das insbesondere in Form einer Transferfolie, einer Laminierfolie oder eines Sicherheitsfadens bereitgestellt ist, weist somit eine oder mehrere Schichten auf, von denen zumindest eine erste Schicht eine diffraktive Struktur bereitstellt, durch welche unter einem vorbestimmten Einfallswinkel zu einer Flächennormalen einfallendes Licht gebeugt wird, sodass für einen in einem vorbestimmten Betrachtungswinkel zur Flächennormalen blickenden Betrachter ein erstes Bild als Beugungsbild Erster Ordnung erscheint, wobei die Flächennormale eine Normale zu einer durch die erste Schicht definierten Grundebene ist, und wobei die diffraktive Struktur derart ausgebildet ist, dass der Betrachtungswinkel größer als 50°, bevorzugt größer als 60°, besonders bevorzugt größer als 70° ist.

Der Begriff der Flächennormalen kann sich insbesondere auf eine ebene erste Schicht beziehen. Die Grundebene der ersten Schicht ist hierbei die Ebene, in die sich die erste Schicht in zwei Richtungen erstreckt. In der Richtung der Schichtenabfolge ist die erste Schicht insbesondere als vergleichsweise dünn anzusehen, sodass die Flächennormale und damit auch der Einfallswinkel und der Betrachtungswinkel mit einer gewünschten Genauigkeit definierbar sind.

Beispielsweise entspricht einer Ausdehnung von diffraktiven Strukturen über Quadratmillimeter eine Strukturtiefe von weniger als 1 μm (Faktor über Tausend).

Insbesondere auch die diffraktive Struktur bewirkt allenfalls eine nur geringe Variation in der Dicke der Schicht, die bei der Definition der Flächennormalen erst recht außer Acht bleibt. Bei einem gekrümmten Sicherheitselement mit gekrümmter erster Schicht kann man die Flächennormale an einer beliebigen Stelle als senkrecht zu einer Tangentenebene an dem Träger verlaufende Gerade ansehen. Ggf. kann die beliebige Stelle die eines vorbestimmten Punktes in der diffraktiven Struktur sein, der einem vorbestimmten Bildpunktbereich des ersten Bildes entspricht. Dies kann beispielsweise ein mittiger Bildpunktbereich sein. Der vorbestimmte Betrachtungswinkel ist mit einer Genauigkeit von +/-5°, bevorzugt von +/-2° definiert; es handelt sich hierbei um die typischen Winkelwerte, die ein Betrachter, der das Sicherheitselement in Händen hält, mit seiner Hand einstellen kann. Man kann dies auch so formulieren, dass es sich um einen vorbestimmten Betrachtungswinkelbereich oder ein vorbestimmtes Betrachtungswinkelintervall handelt, das aber sich nicht mehr als +/- 5°, bevorzugt nicht mehr als +/- 2° um einen mittleren Wert erstreckt.

Während man herkömmliche Hologramme mehr oder weniger senkrecht zum Substrat betrachtet bei Lichteinfall von oben, wird vorliegend das Sicherheitselement gekippt gehalten, sodass sowohl der Einfallswinkel als auch der Betrachtungswinkel schräg liegen.

Dadurch, dass das erste Bild nur bei relativ großem Betrachtungswinkel sichtbar ist und es ein Beugungsbild Erster Ordnung ist, sind die typischen Abmessungen und Abstände in der diffraktiven Struktur kleiner als bei einem Bild, das in einem Betrachtungswinkel von 0° oder wenig mehr sichtbar ist. Umfasst die diffraktive Struktur ein Beugungsgitter, so muss dieses beispielsweise eine relativ hohe Spatialfrequenz aufweisen, z. B. mehr als das Doppelte als bei herkömmlichen Hologrammen, die in einem kleineren Betrachtungswinkel betrachtet werden. Während die Gitterperioden bei herkömmlichen Hologrammen größer als die Lichtwellenlänge sind, sind sie vorliegend kleiner als diese. Dadurch, dass Gitter mit solchen Spatialfrequenzen bzw. Gitterzahlen nicht so leicht herstellbar sind, ist die Fälschungssicherheit bei dem erfindungsgemäßen Sicherheitselement besonders hoch. Insbesondere derzeitige Maschinen zur Herstellung von sogenannten Dot-Matrix-Hologrammen sind nicht in der Lage, derart hochfrequente Gitter herzustellen.

Bevorzugt ist nicht nur der vorbestimmte Betrachtungswinkel relativ hoch, sondern auch der zu diesem definierte vorbestimmte Einfallswinkel relativ hoch. Dieser Einfallswinkel liegt bevorzugt bei über 30° und besonders bevorzugt bei zwischen 40° und 50°. Die Winkelangaben sind mit Vorzeichen zu verstehen, sodass der Einfallswinkel also auf derselben Seite der Flächennormalen definiert ist wie der Betrachtungswinkel. Diese Winkel sind hier z. B. als positive Winkel definiert, genauso wie der Einfallswinkel. Dies lässt sich auch so ausdrücken, dass die Winkeldifferenz zwischen dem Einfallswinkel und dem Betrachtungswinkel zwischen 20° und 60° liegt.

Die Maßnahme, gemäß der die Strukturelemente der diffraktiven Struktur besonders klein sind, also z. B. die Spatialfrequenz eines Beugungsgitters besonders hoch ist, geht einher mit einem großen Winkelabstand zwischen dem Betrachtungswinkel für eine Nullte Ordnung und dem Betrachtungswinkel für die Erste Ordnung. Bevorzugt ist die diffraktive Struktur so ausgebildet, dass der Betrachtungswinkel von einem Winkel, in welchem das in dem vorbestimmten Einfallswinkel einfallende Licht in die Nullte Ordnung gebeugt wird, um einen Winkelabstand von mindestens 90° verschieden ist. In diesem Falle ist z. B. lediglich die plus Erste Ordnung sichtbar, nicht aber die minus Erste Ordnung, die nämlich in das Sicherheitselement hineingebeugt wird.

Bei dem ersten Bild handelt es sich um ein (mehr-)farbiges Bild. Insbesondere ist das mehrfarbige Bild aus mehreren farbigen Elementen (Flächenteilen, Bildpunkten) zusammengesetzt. Jedes farbige Element wird durch geeignete Ausbildung der diffraktiven Struktur in einer oder mehreren zugehörigen Zonen bereitgestellt. Ein mehrfarbiges Bild lässt sich so beschreiben, dass die diffraktive Struktur eine Mehrzahl von Bereichen aufweist, die unterschiedliche Wellenlängen des Lichts zu einem in die Betrachtungsrichtung schauenden Betrachter beugen. Erfindungsgemäß weist die diffraktive Struktur eine oder mehrere erste Zonen und eine oder mehrere zweite Zonen und/oder eine oder mehrere dritte Zonen auf, zumindest zwei unterschiedliche Arten von Zonen (erste und zweite, erste und dritte), bevorzugt sämtliche drei Arten von Zonen (erste, zweite und dritte Zonen). Hierbei ist die diffraktive Struktur in jeder ersten Zone so ausgebildet, dass sie eine zugeordnete erste Wellenlänge des unter dem vorbestimmten Einfallswinkel einfallenden Lichts zur Ausbildung des Beugungsbilds Erster Ordnung in den vorbestimmten Betrachtungswinkel beugt, die diffraktive Struktur in jeder zweiten Zone ist so ausgebildet, dass sie eine zugeordnete zweite, von der ersten Wellenlänge verschiedene Wellenlänge des unter dem vorbestimmten Einfallswinkel einfallenden Lichts zur Ausbildung des Beugungsbilds Erster Ordnung in den vorbestimmten (also gleichen) Betrachtungswinkel beugt, und die diffraktive Struktur in jeder dritten Zone ist so ausgebildet, dass sie eine zugeordnete dritte, von der ersten und zweiten Wellenlänge verschiedene Wellenlänge des unter dem (gleichen) vorbestimmten Einfallswinkel einfallenden Lichts zur Ausbildung des Beugungsbilds Erster Ordnung in den vorbestimmten Betrachtungswinkel beugt. Mehrfarbige holographische Bilder sind ästhetisch ansprechender und schwerer zu fälschen als einfarbige holographische Bilder.

Es gibt verschiedene Ausführungsmöglichkeiten, wie die Farben bereitgestellt werden können.

Bei einer ersten Variante stellt (zumindest) ein erster Bereich und bevorzugt jeder Bereich einen (für das unbewaffnete menschliche Auge) sichtbaren Teil einer Bildfläche des ersten Bildes bereit. Das menschliche Auge kann ohne ein Hilfsmittel wie etwa einer Lupe Abmessungen oberhalb von 300 μm, bevorzugt von oberhalb 500 μm unter-

scheiden, bei einem normalen Leseabstand von etwa 30 cm. Bevorzugt ist bei dieser Variante vorgesehen, dass die Abmessungen des einen, bzw. bevorzugt jedes ersten Bereichs größer als 300 μm, besonders bevorzugt größer als 500 μm, ganz besonders bevorzugt größer als 500 μm sind. Die ersten Bereiche der diffraktiven Struktur umfassen hierbei entweder ausschließlich zumindest eine erste Zone oder ausschließlich zumindest eine zweite Zone oder ausschließlich zumindest eine dritte Zone. So lässt sich das erste Bild als aus einer Mehrzahl von jeweils einfarbigen Teilflächen zusammengesetzt vorstellen. Es kann sich hierbei um Teilflächen handeln, die durch die Form des Bildgegenstandes vorgegeben sind.

Bei der zweiten Variante weist das Sicherheitselement zumindest einen oder mehrere zweite Bereiche der diffraktiven Struktur mit einer Vielzahl von Bildpunktbereichen auf, die in zumindest einer in der Grundebene definierten Erstreckungsrichtung Abmessungen der Rasterweite von kleiner als 300 μm, bevorzugt von zwischen 50 μm und 250 μm, bevorzugt von 75 und 150 μm aufweisen.

Insbesondere sollte der Wiederholabstand im Raster kleiner als 300 μm sein.

Haben wir es beispielsweise mit einem Zweifach-Raster zu tun, bei dem sich zwei Typen von Bildpunktbereichen in der Erstreckungsrichtung einander abwechseln, dann soll der Abstand zwischen zwei gleichartigen Elementen kleiner als 300 μm sein. Teilt man diese Abstände in zwei Bildpunktbereiche für die Rasterung, dann hat jeder Bildpunktbereich für sich gesehen einen Abstand in der Erstreckungsrichtung von kleiner als 150 μm.

Haben wir es mit einem Dreifach-Raster zu tun, soll auch hier wieder der Abstand zwischen gleichartigen, einander entsprechenden Bildpunktbereichen kleiner als 300 μm sein. Um diesen Abstand mit drei unterschiedlichen Arten von Bildpunktbereichen zu bedecken, sollte die Abmessung eines Bildpunktbereichs in der Erstreckungsrichtung kleiner als 100 μm sein.

Zumindest einer der Bildpunktbereiche weist zumindest zwei unterschiedliche Zonen von ersten und/oder zweiten und/oder dritten Zonen auf, derart, dass aufgrund einer additiven Mischung des von den zumindest zwei benachbarten Zonen gebeugten Lichts unterschiedlicher Wellenlänge für den menschlichen Betrachter ohne Hilfsmittel eine Mischfarbe wahrnehmbar ist, also sich für den Betrachter ein durch die additive Mischung bestimmter Farbeindruck des jeweiligen Bildpunktbereichs ergibt. Hier wird gerade ausgenutzt, dass das menschliche Auge einen Abstand von kleiner 300 μm nicht wahrnehmen kann, bei einem normalen Leseabstand von etwa 30 cm. Für das menschliche Auge mischen sich daher die von den beiden benachbarten Zonen erzeugten Farben zu der Mischfarbe. Die Zonen/Bildpunktbereiche können hier kleine kreisförmige oder quadratische bzw. rechteckige oder sechseckige oder mehreckige Bildpunkte sein, die in allen Abmessungsrichtungen Abmessungen von kleiner als 300 μm aufweisen. Die Bildpunktbereiche können aber auch genauso streifenförmig sein, wobei die Streifen dann zwar länger als 300 μm sein können, aber in der Breite kleiner als 300 μm sind. Wenn die Teilbereiche in eine Richtung Abmessungen von größer als 300 μm aufweisen, ist bevorzugt vorgesehen, dass sie längs eines Richtungspfeils zueinander benachbart sind, entlang von dem sie die Abmessungen der Rasterweite von kleiner als 300 μm aufweisen. Bei einem Zweifach-Raster weisen sie somit Abmessungen längs des Richtungspfeils von kleiner als 150 μm auf, bei einem Dreifach-Raster Abmessungen von kleiner als 100 μm.

Insbesondere bei der zweiten Variante ist es besonders einfach möglich, ein Echtfarbenbild bereitzustellen. Ein erstes, z.B. holographisches Bild als Echtfarbenbild wirkt für einen Betrachter besonders ansprechend, weil es die Farben einer Vorlage genau wiedergibt. Bevorzugt ist vorgesehen, dass das erste Bild die Farben einer Vorlage nur in dem Betrachtungswinkel genau wiedergibt (und ggf. in anderen Betrachtungswinkeln zwar zumindest teilweise sichtbar ist, dann aber in anderen Farben, insbesondere sogenannten Falschfarben).

Bei einer bevorzugten Ausführungsform dieser Variante ist die diffraktive Struktur jeder der Zonen als Beugungsgitter ausgebildet, das durch einen oder mehrere innerhalb der Zone konstante Gitterparameter aus der Gruppe von Spatialfrequenz, Azimutwinkel, Reliefform und Relieftiefe bestimmt ist.

Ein Zusatzeffekt besteht darin, dass die diffraktive Struktur als Beugungsgitter ausgebildet ist, das ein Lineargitter, ein Schlangenliniengitter oder Parabelliniengitter (Gitterlinien wellenförmig oder parabelförmig, mit Vorzugsrichtung), ein Kreuzgitter mit unterschiedlicher Spatialfrequenz in unterschiedlichen Richtungen, ein Kreuzgitter mit gleicher Spatialfrequenz in zueinander senkrechten Richtungen und/oder ein Zirkulargitter umfasst. Je nach Art und Anordnung der Lichtquelle relativ zu dem Beugungsgitter ist die Sichtbarkeit des gewünschten optischen Effekts unterschiedlich gut. Wählt man eine Punktlichtquelle oder eine Leuchtstoffröhre mit Ausrichtung quer zu einer Kipprichtung, um die das Beugungsgitter beim Betrachten gekippt wird (z. B. Leuchtstoffröhre parallel zur horizontalen Achse des Beugungsgitters, Kipprichtung vor-zurück oder Leuchtstoffröhre parallel zur vertikalen Achse des Beugungsgitters, Kipprichtung links-rechts), ist die Sichtbarkeit des optischen Effekts nur in einem kleineren Winkelbereich gegeben. Wählt man dagegen eine Leuchtstoffröhre mit Ausrichtung parallel zu einer Kipprichtung, um die das Beugungsgitter beim Betrachten gekippt wird (z. B. Leuchtstoffröhre parallel zur vertikalen Achse des Beugungsgitters, Kipprichtung vor-zurück oder Leuchtstoffröhre parallel zur horizontalen Achse des Beugungsgitters, Kipprichtung links-rechts), ist die Sichtbarkeit des optischen Effekts in einem größeren Winkelbereich gegeben. Bei allen diesen Ausführungsformen für die Ausgestaltung des Beugungsgitters ist gemeinsam, dass bei einer Drehung im Azimut, also in einer Ebene des Substrats oder um die Achse einer Flächennormalen des Substrats ein Zusatzeffekt sichtbar wird. Bei einem Lineargitter unter üblichen Beleuchtungsbedingungen verschwindet das erste Bild der Ersten Beugungsordnung bei einer weiteren solchen Drehung um 90°. Bei einem Kreuzgitter mit unterschiedlicher Spatialfrequenz und unterschiedlichen Richtungen erscheint das erste Bild der Ersten Beugungsordnung dann in einer anderen Farbe, bzw. in anderen Farben. Bei einem Kreuzgitter mit gleicher Spatialfrequenz in zueinander senkrechten Richtungen hingegen sieht man dasselbe erste Bild der Ersten Beugungsordnung auch bei dieser Zusatzdrehung, und auch dies kann als überraschender Effekt angesehen werden. Bei einem Zirkulargitter sieht man das erste Bild der Ersten Beugungsordnung nicht nur bei zueinander um 90° verschiedenen Azimutwinkeln, sondern kontinuierlich über den Bereich einer Drehung hinweg. Schlangenliniengitter oder Parabelliniengitter können dazu dienen, den Bereich zu erweitern, unter dem das Bild sichtbar ist. Die Gitterfurchen von Schlangenliniengittern und Parabelliniengittern erstrecken sich über einen Bereich von Azimutwinkeln, sodass entsprechend die Bilder auch über einen solchen größeren Bereich von Azimutwinkeln zu sehen sind. Auch dies kann als überraschender Effekt angesehen werden.

Bevorzugt sind alle Gitterparameter innerhalb jeder Zone jeweils konstant.

Bevorzugt ist die in Richtung der Flächennormalen definierte Relieftiefe der Beugungsgitter in Abhängigkeit von der jeweiligen, der Zone zugeordneten Wellenlänge derart gewählt, dass die Beugungseffizienz der Beugung von Licht dieser Wellenlänge in den Betrachtungswinkel maximal ist. Hier sorgt man für eine optimale Ausnutzung des einfallenden Lichts zur Erzeugung des ersten Bildes.

In einem weiteren Aspekt der Erfindung, der sowohl bei einfarbigem ersten Bild als auch bei mehrfarbigem ersten Bild eingesetzt werden kann, ist die diffraktive Struktur derart ausgebildet, dass eine Vorlage für einen in die Betrachtungsrichtung schauenden Betrachter unverzerrt wiedergegeben wird. Es handelt sich hierbei um ein sogenanntes "anamorphes Bild": die Vorlage erscheint bei einem anamorphen Bild bei Betrachtung in einem Winkel von 0° oder sonstigem kleinen Betrachtungswinkel zur Flächennormalen verzerrt. Diese Verzerrung gleicht aber genau die perspektivische Verzerrung aus, die bei einer Verkippung erfolgt. Dadurch, dass bei der vorliegend beanspruchten Erfindung eine starke Verkippung des Sicherheitselements mit der diffraktiven Struktur im Verhältnis zum Betrachter notwendig ist, kommt es zu einer besonders starken perspektivischen Verzerrung. Wird diese Verzerrung genau ausgeglichen, sodass die Vorlage für den in die Betrachtungsrichtung schauenden Betrachter (also bei verkipptem Sicherheitselement mit diffraktiver Struktur die Erste Beugungsordnung sehenden Betrachter) unverzerrt wiedergegeben wird, so wird ein für den Betrachter überraschendes Sicherheitsmerkmal bereitgestellt. Überdies ist dieser Effekt auch nur schwer zu fälschen.

Bevorzugt kann dies mit ein oder mehreren der folgenden Maßnahmen einhergehen, die aber auch unabhängig von einem anamorphen Bild verwirklicht werden können. Die erste Schicht weist

a) in Bildpunktbereichen erste, zweite, dritte und/oder vierte Zonen mit Beugungsgittern auf und fünfte Zonen ohne Beugungsgitter auf. Hierbei unterscheidet sich das Flächenverhältnis der Fläche der Gesamtheit der jeweiligen ersten, zweiten, dritten und/oder vierten Zonen zu den Flächen der fünften Zonen in ersten Bildpunktbereichen von demjenigen Flächenverhältnis der Fläche der Gesamtheit der jeweiligen ersten, zweiten, dritten und/oder vierten Zonen zu der Fläche der fünften Zonen in zweiten Bildpunktbereichen und/oder

b) es unterscheidet sich die Relieftiefe des jeweiligen Beugungsgitters in den ersten, zweiten, dritten und/oder vierten Zonen eines ersten Bildpunktbereichs von der Relieftiefe des Beugungsgitters der entsprechenden ersten, zweiten, dritten und/oder vierten Zonen eines zweiten Bildpunktbereichs, und/oder

c) es unterscheidet sich die Spatialfrequenz des jeweiligen Beugungsgitters in den ersten, zweiten, dritten und/oder vierten Zonen eines ersten Bildpunktbereichs von der Spatialfrequenz des Beugungsgitters der entsprechenden ersten, zweiten, dritten und/oder vierten Zonen eines zweiten Bildpunktbereichs.

Die Maßnahmen a) und b) dienen zur Variation der durch die einzelnen Bildpunktbereiche bereitgestellten Helligkeit, etwa zur Anpassung an eine Bildvorlage oder an spezielle Beleuchtungsbedingungen. Die Maßnahme c) dient zur Anpassung an einen Betrachtungswinkel, wenn die diffraktive Struktur so ausgedehnt ist, dass der Betrachtungswinkel - insgesamt immer noch in einem Bereich von über 50°- zwischen zwei Betrachtungswinkeln über die diffraktive Struktur hinweg variiert.

Dies hat in folgendem Zusammenhang einen Sinn: Es lässt sich eine Solllage definieren, die bei der Verkippung des Sicherheitselements mit der diffraktiven Struktur eingenommen wird relativ zum Betrachter, damit dieser genau in die Betrachtungsrichtung schaut und das erste Bild als Beugungsbild Erster Ordnung sieht. Die dem Betrachter in der Solllage ferneren Bereiche erscheinen aufgrund der Perspektive dichter. Zum Ausgleich dessen sollen sie eine geringere Dichte in der (Flächenbelegung der) diffraktiven Struktur aufweisen. So werden also in der diffraktiven Struktur fünfte Zonen vorgesehen, in denen nicht gebeugt wird (ganz allgemein kann hier z. B. eine ebene Fläche realisiert werden (Spiegel), eine Mottenaugenstruktur, eine Mattstruktur oder ähnliches). Der Flächenanteil der Zonen mit einem Beugungsgitter im Verhältnis zu dem der fünften Zonen ohne Beugungsgitter definiert dann genau die genannte Dichte.

Genauso kann durch Variation der Relieftiefe in Abhängigkeit von dem Ausmaß der Entfernung zum Betrachter für einen Ausgleich gesorgt werden, damit die Helligkeitsverhältnisse entsprechend der Vorlage eingestellt werden.

Bei stark ausgedehntem holographischem Bild kann es sogar sein, dass der Betrachtungswinkel im unteren Bereich des Bildes für den Betrachter ein anderer ist als im oberen Bereich des Bildes. Um dies zu berücksichtigen, wird die Maßnahme c) getroffen. Will man den Effekt des Betrachtens mit einer gleichen Farbe erzielen, muss daher die Spatialfrequenz bei den entfernteren Bereichen größer sein als bei den näheren Bereichen.

Das alles lässt sich so formulieren, dass das Flächenverhältnis in dem ersten Bildpunktbereich und/oder zumindest eine Relieftiefe und/oder Spatialfrequenz in dem ersten Bildpunktbereich in einer Solllage des Sicherheitselements zu einem Betrachter von dem Ausmaß der Entfernung des ersten Bildpunktbereichs von dem Betrachter abhängig ist und das Flächenverhältnis in dem zweiten Bildpunktbereich und/oder die Relieftiefe und/oder die Spatialfrequenz in dem zweiten Bildpunktbereich in der Solllage des Sicherheitselements zu einem Betrachter von dem Ausmaß der Entfernung des zweiten Bildpunktbereichs von dem Betrachter abhängig ist.

Bei geeigneter Wahl der Vorlage entspricht ein Echtfarbenbild der Erwartungshaltung des Betrachters, sodass das erste Bild besonders authentisch und wenig künstlich erscheint. (Beispielsweise kann man die Blätter eines Baumes als grün darstellen, einen Himmel blau, eine Sonne in gelblichem Weiß etc.)

Bei einem Farbbild ist gemäß einer bevorzugten Ausführungsform der Erfindung vorgesehen, dass die diffraktive Struktur zumindest einen solchen dritten Bereich aufweist, der eine Information bereitstellt, die nur in dem richtigen Betrachtungswinkel für den Betrachter erkennbar ist und damit als Referenzobjekt dienen kann.

So kann etwa eine bestimmte Form in einer bestimmten Farbe als Information angesehen werden. Beispielsweise kann das erste Bild eine Verkehrsampel darstellen, und wenn deren unterste Lampe grün erscheint, kann man dies als Information sehen. Die Information beinhaltet dann, dass, wenn der Betrachter die grüne Lampe erkennt, genau die gewünschte Farbdarstellung erzielt ist, insbesondere ggf. das Echtfarbenbild richtig wahrgenommen wird. Die Information kann auch in dem Bereitstellen eines Textes bestehen, der in einer bestimmten Farbe aufleuchtet und dem Betrachter dadurch die Information gibt, dass er den richtigen Betrachtungswinkel gewählt hat. Der Betrachter kann sich dann an dem Text orientieren. Beispielsweise kann dem Betrachter mitgeteilt werden, dass der Text rot aufleuchten muss. Der Text kann dann lauten: "richtiger Betrachtungswinkel", oder ähnliches. Sieht der Betrachter dann die Schrift "richtiger Betrachtungswinkel" korrekt, weiß er, dass er auch das Farbbild in der richtigen Farbe sieht. Der Text kann auch selbst dem Betrachter die Information geben, in welcher Farbe der Text erscheinen muss. So kann beispielsweise der Schriftzug "rot" durch eine diffraktive Struktur bereitgestellt sein, die für den in dem Betrachtungswinkel schauenden Betrachter genau rot erscheint. Gleichzeitig kann beispielsweise eine zweite Schrift die Information "grün" wiedergeben und unter dem Betrachtungswinkel grün erscheinen.

In einer weiteren Variante, bei der unter verschiedenen Betrachtungsbedingungen, d.h. unter verschiedenen Kipp- und/oder Drehwinkeln unterschiedlich farbige Bilder sichtbar sind, kann ein gemeinsames Bildelement in seinem Farbeindruck konstant gehalten werden. Dieses gemeinsame Bildelement ist dann in allen Bildern weitgehend farbig konstant, wogegen sich die Umgebung dieses gemeinsamen Bildelements im Farbeindruck je nach Betrachtungsbedingungen ändert. Dieses gemeinsame Bildelement kann dabei unter allen Betrachtungsbedingungen als optische Kontrasthilfe dienen, um die Änderung des Farbeindrucks optisch besser deutlich werden zu lassen.

Beispielsweise kann ein Motiv eine Landschaft zeigen mit Sonne, Bergen, Bäumen. Die Sonne ist das gemeinsame Bildelement und stets gelb. Der Rest der Landschaft ändert sich zwischen einer Sommerlandschaft und einer Winterlandschaft entsprechend farbig zwischen vorherrschend grün und vorherrschend grau/weiß. Die Sonne kann dabei beispielsweise mit einem Kreuzgitter oder einem Zirkulargitter ausgeführt sein, welche Gitter unter sehr vielen unterschiedlichen Betrachtungsbedingungen mit weitgehend gleichem Farbeindruck sichtbar sind.

Bei einer weiteren bevorzugten Ausführungsform der Erfindung ist die diffraktive Struktur in den zweiten, dritten oder in vierten Zonen als Beugungsgitter mit einer Spatialfrequenz von zwischen 3700 Linien/mm und 5000 Linien/mm, bevorzugt von zwischen 4000 Linien/mm und 5000 Linien/mm ausgebildet. Ein solches Beugungsgitter erscheint bei besonders hohen Winkeln mit entsprechend schräg einfallendem Licht in einer Farbe von zwischen Purpur und Violett. Eine solche Zone ist bei einem kleineren Betrachtungswinkel nicht erkennbar, insbesondere nicht in einer anderen Farbe. Der Teilbereich mit dem Beugungsgitter mit der besonders hohen Spatialfrequenz ist insbesondere auch als Information im Sinne der vorgenannten bevorzugten Ausführungsform anzusehen, denn dem Betrachter kann mitgeteilt werden, dass er den richtigen Betrachtungswinkel gewählt hat, wenn er die Farbe "violett" überhaupt sieht. Die beiden Ausführungsformen können miteinander verknüpft sein, d. h. es kann in violetter Farbe ein Symbol oder Text in dem ersten Bild bereitgestellt sein. Genauso aber auch kann das erste Bild einen violetten Bildanteil aufweisen, der auf natürliche Art und Weise zu dem Bildgegenstand gehört. Beispielsweise kann das Bild einen Lavendelstrauch oder einen Fliederbusch zeigen.

Die genannten besonders hohen Spatialfrequenzen für das Beugungsgitter erschweren auch die Fälschung des Sicherheitselements gemäß dieser bevorzugten Ausführungsform.

Bei allen Ausführungsformen der Erfindung ist die erste Schicht eine Replizierlackschicht aus einem thermoplastischen Material oder aus einem mittels UV-Strahlung härtbaren Material. In eine solche Replizierlackschicht lässt sich eine diffraktive Struktur besonders gut durch Abformen von einer Masterstruktur vorsehen.

Bevorzugt ist eine Reflexionsschicht auf der Replizierlackschicht zumindest in Bereichen der diffraktiven Struktur angeordnet.

Die Reflexionsschicht kann hierbei eine Metallschicht, z. B. eine Aluminiumschicht sein, die aufgedampft wird, es kann sich aber auch um eine sogenannte HRI-Schicht handeln, wobei "HRI" für "high refractive index", hohen Brechungsindex, steht. Es handelt sich hierbei insbesondere um eine Schicht mit einem Brechungsindex von typischerweise über 1,5. Insbesondere kann vorgesehen sein, dass die Reflexionsschicht eine dielektrische Schicht ist, die einen Brechungsindex aufweist, der sich von dem Brechungsindex der Replizierlackschicht um zumindest 0,2, bevorzugt zwischen 0,5 und 1,75 unterscheidet und eine Dicke von zwischen 30 nm und 250 nm aufweist. Als HRI-Schicht wird beispielsweise Zinksulfid verwendet, oder auch $TiO_2$. Als HRI-Schicht eignen sich auch HRI-Polymere, die insbesondere mit Nanopartikeln ausgerüstet oder dotiert sind. HRI-Polymere können dabei in höheren Schichtdicken vorliegen, z. B. im Bereich von 500 nm bis 1500 nm. Bei geeigneter Ausbildung dieser Reflexionsschicht lässt sich ein Zusatzeffekt erzielen: Zusätzlich zu dem ersten Bild als Beugungsbild Erster Ordnung ist in Betrachtungsrichtung im Spiegelreflex (also in Richtung der Flächennormalen) ein Farbeffekt erzielbar. Dies kann sogar ein holographisches Bild (das erste Bild) in Nullter Ordnung sein (sogenanntes Reflexionsbild).

Bei der Erfindung können auch andere, weitere Zusatzeffekte vorgesehen sein:

Bei einem Zusatzeffekt stellt die diffraktive Struktur durch erste und/oder zweite und/oder dritte Bereiche ein erstes Bild bereit und durch vierte Bereiche, die mit den ersten, zweiten und/oder dritten Bereichen verschachtelt (interlaced) sind, ein zweites Bild bereit, welches als Beugungsbild Erster Ordnung in einer anderen Orientierung des Sicherheitselements bezüglich einer Drehung in der Grundebene als das erste Bild zu sehen ist.

Das erste (ggf. holographische) Bild ist also in einem anderen Azimutwinkel sichtbar als das zweite (ggf. holographische) Bild. Durch diesen Zusatzeffekt wird für eine erhöhte Sicherheit gesorgt.

Das Verschachteln (Interlacing) erfolgt bei diesem Zusatzeffekt bevorzugt derart, dass die Bereiche in der Richtung, in der sie einander abwechseln, Abmessungen der Rasterweite von kleiner als 300 µm aufweisen, bevorzugt von zwischen 50 µm und 250 µm, bevorzugt von zwischen 75 und 150 µm. Die Richtung, in der sie einander abwechseln ist insbesondere eine in der Grundebene definierte Erstreckungsrichtung. Damit ist die Verschachtelung für das menschliche Auge ohne Hilfsmittel nicht erkennbar bei einem normalen Leseabstand von etwa 30 cm.

Ein weiterer Zusatzeffekt besteht darin, dass die erste Schicht eine Grobstruktur und eine mit dieser überlagerte Feinstruktur aufweist, wobei durch die Grobstruktur ein asymmetrisches Gitter in Sägezahnform bereitgestellt ist, das durch eine bezüglich der Grundebene flachere Flanke und eine bezüglich der Grundebene steilere Flanke in jeweiligen Gittereinheiten definiert ist. Die Feinstruktur ist dann auf mehreren der groben flacheren Flanken verteilt. Beispielsweise sind bei einem Beugungsgitter mehr als 3, bevorzugt mehr als 5 bis zu einer Zahl von über 100 Linien auf der flacheren Flanke vorgesehen.

Wie von asymmetrischen Gittern der genannten Art (sogenannten Blaze-Gittern) bekannt, erzielt man einen besonders interessanten Effekt bei einer Drehung um 180°. Vorliegend kann dies bewirken, dass die diffraktive Struktur im Betrachtungswinkel einmal sichtbar ist, wenn man dann aber das Sicherheitselement im Azimut, also in seiner Ebene dreht (bzw. um eine Flächennormale als Drehachse), und zwar um 180°, erscheint das erste Bild nicht mehr. Dies lässt sich mit Bereichen außerhalb des asymmetrischen Gitters kombinieren; beispielsweise kann durch ein Beugungsgitter mit einer Spatialfrequenz von größer als 3700 Linien/mm, bevorzugt von größer als 4000 Linien/mm und kleiner als 5000 Linien/mm ein violett wirkender Rahmen vorgesehen sein, der dann auch bei Drehung um 180° noch zu sehen wäre.

Der genannte Effekt bei der Drehung wird insbesondere bei einem Blaze-Winkel (Winkel der flacheren Flanke) von mehr als 20° erzielt. Bei einem Blaze-Winkel von weniger als 10° erscheint das erste Bild bei einer Drehung um 180° möglicherweise nur in anderen Farben.

Grundsätzlich können die erfindungsgemäßen Ideen mit einem KINEGRAM® oder einem TRUSTSEAL® kombiniert werden; es handelt sich hierbei um, insbesondere computergenerierte, Bildeffekte mit Bildwandlung ("image flip"), einbezogenen Transformationsvorgängen etc. Die Kombination kann entweder durch eine Rasterung erfolgen, durch die die unterschiedlichen Effekte nebeneinander gestellt werden, durch ein übergeordnetes Raster, durch die Verwendung einer Mosaikartigen Nebenordnung der diffraktiven Effekte, im Rahmen eines Hintergrunds für das gewünschte Design, bei dem die erfindungsgemäßen Effekte erzielt werden, oder innerhalb bestimmter Designelemente, durch die der erfindungsgemäße Effekt realisiert wird.

Ein Beispiel für eine solche Kombination ist die Ausführung des erfindungsgemäßen Sicherheitselements mittels Strukturen mit einer hohen Relieftiefe und/oder mit einem hohen Tiefen-Breiten-Verhältnis der Strukturen. Das Tiefen-Breiten-Verhältnis soll dabei vorzugsweise größer als 0,5, insbesondere größer als 1,0 sein. Die Strukturen können dabei Kreuzgitter oder Lineargitter sein. Derartige Strukturen wirken bei senkrechter oder leicht bis mittelmäßig geneigter Betrachtung (z.B. Winkel zwischen 0° und 45°) sehr dunkel bis schwarz und können in dieser senkrechten oder leicht geneigten Betrachtung als Hintergrundelement für andere Strukturen sein, wie vorstehend beschrieben, beispielsweise in einem Design aus Vordergrund und Hintergrund, in einem Raster oder Mosaik. Bei stark geneigter Betrachtung würde dann jedoch der Farbeindruck dieser Strukturen sichtbar und die jeweils anderen Strukturen wären in dieser stark geneigten Betrachtung weniger gut sichtbar.

So kann beispielsweise ein Hologramm eines durch eine Stadt fahrenden Automobils bei senkrechter Betrachtung mit Beleuchtung von oben sichtbar werden. Ein zweites Bild wäre dann eine Ampel mit rotem, gelbem und grünem kreisförmigen Bereich. Durch das zweite, farbige Bild, wären dann die erfindungsgemäßen Ideen verwirklichbar, und dieses Bild könnte bei verkipptem Winkel betrachtet werden. Die zur Bereitstellung der beiden Bilder eingesetzten Beugungsgitter wären dann ineinander verschachtelt (nebeneinander angeordnet), und zwar in einem linearen Raster mit einer Rasterwiederholung unterhalb der Auflösungsgrenze des menschlichen Auges (kleiner als 300 $\mu$m).

Bei einem weiteren Aspekt der Erfindung wird ein Sicherheitsdokument, insbesondere eine Banknote, ein Passdokument, ein Personalausweis oder eine Karte mit einem Sicherheitselement der erfindungsgemäßen Art bereitgestellt.

Diffraktive Strukturen, die in Erster Ordnung in einem Winkel von größer als 50°, bevorzugt größer als 60° und besonders bevorzugt größer als 70° beugen, zeigen ausgeprägte Polarisationseffekte. Diese können mithilfe eines Polarisators sichtbar gemacht werden. Bevorzugt weist das Sicherheitsdokument selbst diesen Polarisator auf, beispielsweise kann er in ein Fenster eines Substrats integriert sein. Das Substrat sollte hierbei soweit flexibel sein, dass der Polarisator in Richtung der diffraktiven Struktur faltbar ist, damit er im Betrachtungswinkel in den Strahlengang zwischen Betrachter und diffraktiver Struktur gerät. Gegebenenfalls kann er auch über die diffraktive Struktur faltbar sein, denn im Spiegelreflex können bestimmte Zusatzeffekte auftreten.

Bei einer Variante der Erfindung wird ein erfindungsgemäßes Sicherheitselement (insbesondere in bzw. an einem Sicherheitsdokument) mit einem alphanumerischen Code oder Barcode (1 D, 2D) kombiniert, wobei der Code durch ein elektronisches Standard-Lesegerät auslesbar ist, und das erfindungsgemäße Sicherheitselement, kann durch das menschliche Auge manuell kontrolliert werden. Die eine codierte Information (also den Code) bereitstellende Schicht bzw. das die codierte Information bereitstellende Material ist bevorzugt flächenmäßig überlappend mit dem Sicherheitselement ausgebildet. Beispielsweise kann in einem maschinenlesbaren Pass (MRP) eine maschinenlesbare Zone (MRZ) (MRP = machine readable passport; MRZ = machine readable zone) vorgesehen sein, welche beispielsweise lt. den Normen ICAO document 9303 und ISO/IEC 7501-1 ausgeführt ist. Eine solche MRZ weist z.B. zwei Zeilen ASCII-Zeichen auf mit jeweils 44 Zeichen Länge für Name, Passnummer, Nationalität, Geschlecht, Geburtsdaten, Passgültigkeit und Personennummer. Eine solche MRZ wird mittels geeignetem Standardlesegerät üblicherweise etwa senkrecht von oben ausgelesen, wobei das überlappende erfindungsgemäße Sicherheitselement nicht hinderlich ist, weil die erfindungsgemäßen sehr hochfrequenten Strukturen von dem Lesegerät optisch nicht erfasst werden. Zusätzlich kann mittels manueller visueller Kontrolle insbesondere bei starker Neigung des Sicherheitselements die Echtheit der MRZ geprüft werden.

Das flächenmäßige Überlappen des Sicherheitselements mit dem auszulesenden Code kann entweder durch direkte Personalisierung, z. B. mittels Laser, des erfindungsgemäßen Sicherheitselements erfolgen oder durch Überlagerung des Codes mittels eines transparenten oder teiltransparenten erfindungsgemäßen Sicherheitselements.

Das Verfahren zur Herstellung eines Sicherheitselements gemäß dem weiteren Aspekt der Erfindung umfasst die Schritte:

a) Bereitstellen eines Bildes als Vorlage
b) Zerlegen des Bildes in Bildpunktelemente
c) Erfassen zumindest eines Helligkeitswerts für jedes Bildpunktelement nach einem vorbestimmten Kriterium
d) Bereitstellen eines Sicherheitselements mit einer oder mehreren Schichten, von denen zumindest eine erste Schicht eine diffraktive Struktur bereitstellt, durch welche unter einem vorbestimmten Einfallswinkel zu einer Flächennormalen einfallendes Licht gebeugt wird, sodass für einen in einem vorbestimmten Betrachtungswinkel zur Flächennormalen blickenden Betrachter ein erstes Bild als Beugungsbild Erster Ordnung erscheint, wobei die Flächennormale eine Normale zu einer durch die erste Schicht definierte Grundebene ist, derart, dass die diffraktive Struktur so ausgebildet ist, dass der Betrachtungswinkel größer als 50°, bevorzugt größer als 60° und besonders bevorzugt größer als 70° ist, und dass die diffraktive Struktur eine Mehrzahl von Bildpunktbereichen aufweist, die jeweils einem Bildpunktelement entsprechen und in dem ersten Bild Licht mit einer gemäß einem dem ersten Bildpunktelement zugehörigen Helligkeitswert definierten Helligkeit wiedergeben.

Bei dem Verfahren wird ein Farbbild als Vorlage bereitgestellt (in Schritt a)), sodann in Schritt b) auch ein Farbwert für jedes Bildpunktelement erfasst und es werden im Schritt d) in den jeweiligen Bildpunktbereichen erste, zweite und/oder dritte Zonen bereitgestellt, derart, dass die Bildpunktbereiche als Beitrag zu dem Beugungsbild Erster Ordnung Licht mit einem gemäß dem entsprechenden Bildpunktelement zugehörigen Farbwert definierten Farbwert wiedergeben, der zumindest für einige Bildpunktbereiche durch additive Farbmischung erzeugt ist. Somit kann durch das Verfahren dafür gesorgt werden, dass in dem vorbestimmten Betrachtungswinkel ein erstes (z. B. holographisches) Bild als Beugungsbild Erster Ordnung erscheint, das die Farben der Vorlage genau wiedergibt. Beispielsweise kann der Farbwert durch R, G und B-Werte beschrieben werden. Zum Beispiel hätte ein gelbes Pixel Werte für R, G, B (255, 237, 0). Diese Farbwerte bestimmen den Flächenanteil der zugehörigen Bildpunktbereiche. Bei dem gelben Pixel werden daher die Bildpunktbereiche, die einen roten und einen grünen Beitrag leisten, in im Wesentlichen gleichen Anteilen bereitgestellt, dafür aber keine Bildpunktbereiche, die die Farbe blau bereitstellen. Ein Pixel in pinker Farbe hätte z. B. Werte für R, G, B von (245, 168, 172). Dann wären die Bereiche für Grün und für Blau im Wesentlichen gleich (29, 4 % bzw. 30 % der eingenommenen Gesamtfläche), hingegen wäre etwas mehr an Rot (40, 5 % der eingenommenen Fläche) vorgesehen.

Anstatt drei unterschiedliche Arten von Bildpunktbereichen vorzusehen, kann die additive Farbmischung auch durch zwei solche Bereiche alleine bereitgestellt werden. Verwendet man nur zwei Farben, kann man neben der Festlegung der relativen Flächenbereichsanteile der beiden Beugungsgitterarten auch unterschiedliche Beugungsgitter verwenden, je nach der gewünschten Farbe.

Ein Beispiel für eine additive Farbmischung durch zwei Bereiche ist die Verwendung von blauen und roten Pixeln zur Verwirklichung der Mischfarbe Weiß. Dabei soll das blaue Pixel ein Beugungsgitter eine Wellenlänge von 486 nm aussenden und das rote Pixel ein Beugungsgitter eine Wellenlänge von 620 nm aussenden. Unter Verwendung der Gittergleichung

$$\sin \theta_m = \sin \theta_{inc} + m \frac{\lambda_0}{d}$$

mit den Parametern $\theta_{inc} = 45°$ ($\theta_{inc}$ = Einfallswinkel) und $\theta_{m=1} = 70,89°$ ($\theta_{m=1}$ = Betrachtungswinkel) ($\lambda_0$ = Wellenlänge des Lichts im Vakuum) erhält man die zugehörige Gitterperiode für die blauen Pixel von 294 nm und für die roten Pixel von 375 nm. Bei dieser Farbmischung ist berücksichtigt, dass das menschliche Auge für Blau und Rot unterschiedlich empfindlich ist. Zur Erzielung eines möglichst reinen Farbeindrucks von Weiß kann es vorteilhaft sein, die Flächengröße der Pixel für Blau und Rot zu variieren. Eine reine Mischfarbe Weiß zu erzeugen, ist bei sämtlichen Farbmischsystemen auf Basis von Rastern und deren technischer Ausführung (z. B. auch Druckverfahren) schwierig und hängt auch vom jeweiligen Spektrum des Beleuchtungslichts ab.

Die ersten, zweiten und dritten Zonen können jeweils als Beugungsgitter ausgebildet werden, derart, dass dem Betrachter das erste Bild mit derselben absoluten Helligkeit und/oder denselben Kontrastverhältnissen erscheint wie die Vorlage. Dies kann durch die oben beschriebenen Maßnahmen erzielt werden, die Gitterparameter des Beugungsgitters entsprechend zu wählen.

Bei einer bevorzugten Ausführungsform des Verfahrens wird die erste Schicht derart bereitgestellt, dass dem Betrachter das Bild entsprechend einer unverzerrten Vorlage erscheint.

Das Verfahren gemäß der Erfindung ist bevorzugt ein Verfahren zum Bereitstellen eines anamorphen ersten, z. B. holographischen Bildes. Schritt a) dieses Verfahrens umfasst dass das Bereitstellen einer ersten Schicht mit einer diffrakturer Struktur derart erfolgt, dass bei der Betrachtung der diffraktiven Struktur in Richtung einer Flächennormalen zu einer in der ersten Schicht definierten Grundebene die Vorlage verzerrt wiedergegeben wird, bei Betrachtung der diffraktiven Struktur in einem vorbestimmten Betrachtungswinkel und gleichzeitige Beleuchtung in einem vorbestimmten Einfallswinkel aber unverzerrt als Beugungsbild Erster Ordnung wiedergegeben wird.

Dieses Verfahren zum Bereitstellen eines anamorphen ersten Bildes gilt auch für Betrachtungswinkel von 5°, 10° etc., bevorzugt wird dies aber in Verbindung mit einem vorbestimmten Betrachtungswinkel von größer als 50°, besonders bevorzugt größer als 60°, ganz bevorzugt größer als 70° verwirklicht.

Bevorzugt wird die Vorlage in mit den Bildpunktelementen identischen oder größer als diese definierte Bildelemente eingeteilt, und eine erste Transformationsfunktion wird analytisch oder numerisch ermittelt, welche angibt, wie die Bildelemente dem Betrachter erscheinen, wobei die Vorlage analytisch oder numerisch einer zweiten Transformationsfunktion unterworfen wird, die invers zu der ersten Transformationsfunktion ist, um die Verteilung von Teilbereichen der diffraktiven Struktur in der ersten Schicht bildelementweise zu berechnen.

Nachfolgend werden bevorzugte Ausführungsformen der Erfindung unter Bezug auf die Zeichnung beschrieben, in der

Fig. 1a    den Schichtaufbau einer Transferfolie als Beispiel eines ersten Sicherheitselements zeigt, und

Fig. 1b    ein weiteres Sicherheitselement zeigt, das unter Verwendung der Transferfolie aus Fig. 1a hergestellt ist,

Fig. 2    eine schematische Darstellung zur Erläuterung von in einer Gleichung auftretenden Größen ist,

| | |
|---|---|
| Fig. 3 | die Darstellung aus Fig. 2 unter Verwirklichung bestimmter erster Werte für die Größen ist und |
| Fig. 4 | die Darstellung aus Fig. 2 unter Verwirklichung bestimmter zweiter Werte für die Größen ist, |
| Fig. 5 | eine gegenüber der Darstellung aus Fig. 2 erweiterte Darstellung ist, um die etwas komplexeren tatsächlichen Verhältnisse zu erläutern, |
| Fig. 6a bis 6c | den Effekt unterschiedlicher Beugungsgitter zur Bereitstellung eines Beugungsbildes Erster Ordnung als Farbbild veranschaulichen, |
| Fig. 6d | ein Beispiel für das Beugungsbild Erster Ordnung als Farbbild gemäß einer ersten Ausführungsform zeigt und |
| Fig. 6e | ein Beispiel für ein Beugungsbild Erster Ordnung als Echtfarbenbild gemäß einer zweiten Ausführungsform zeigt, die |
| Fig. 7a bis 7d | die Beugungseffizienz von Licht einer bestimmten Wellenlänge bei bestimmten Beugungsgittern in Abhängigkeit von deren Tiefe veranschaulichen, |
| Fig. 8a bis 8d | verschiedene Ausführungsformen eines Referenzelements in dem Beugungsbild Erster Ordnung zeigen, |
| Fig. 9a | den Effekt einer Stauchung eines unter starkem Kippwinkel betrachteten Bildes zeigt, wobei |
| Fig. 9b | das ungestauchte Bild zeigt und |
| Fig. 9c | das gestauchte Bild zeigt, |
| Fig. 10a | den Effekt der unverzerrten Wiedergabe eines Vorlagebildes auch bei starker Verkippung des Bildträgers veranschaulicht und |
| Fig. 10b | hierzu zeigt, wie dieses Bild bei Betrachtung senkrecht zur Bildebene aussieht, |
| Fig. 11a und 11b | veranschaulichen, dass bei unterschiedlicher Größe des betrachteten Bildes unterschiedliche Betrachtungswinkel berücksichtigt werden müssten, |
| Fig. 12 | zur Veranschaulichung eines Sicherheitselements dient, bei dem zwei Bilder ineinander verschachtelt sind, |
| Fig. 13a und 13c | die Wirkung eines Lineargitters, eines Kreuzgitters mit unterschiedlichen Spatialfrequenzen in unterschiedlichen Richtungen und eines Kreuzgitters mit gleichen Spatialfrequenzen in zueinander senkrechten Richtungen auf einen erzielten Bildeffekt veranschaulichen, |
| Fig. 14a und 14b | eine bevorzugte Ausführungsform veranschaulichen, bei der der Träger ein asymmetrisches Sägezahngitter (Blazegitter) umfasst, auf dessen flacheren Flanken die diffraktiven Struktur ausgeformt ist, |
| Fig. 15 | eine schematische Darstellung ist die zur Veranschaulichung eines bei einer bevorzugten Ausführungsform mit einer dielektrischen hochbrechenden Schicht als Reflexionsschicht verwirklichbaren Zusatzeffekts dient, |
| Fig. 16 | einen Graphen zur Veranschaulichung der Leistungsabhängigkeit zweier Polarisationsmoden TE und TM in Abhängigkeit von einer Wellenlänge zeigt, |
| Fig. 17a | ein Sicherheitsdokument mit einem integrierten Polarisator in der Draufsicht zeigt, |
| Fig. 17b | das Sicherheitsdokument aus Fig. 17a in zusammengefalteten Zustand zur Wahrnehmung eines ersten Effekts zeigt und |

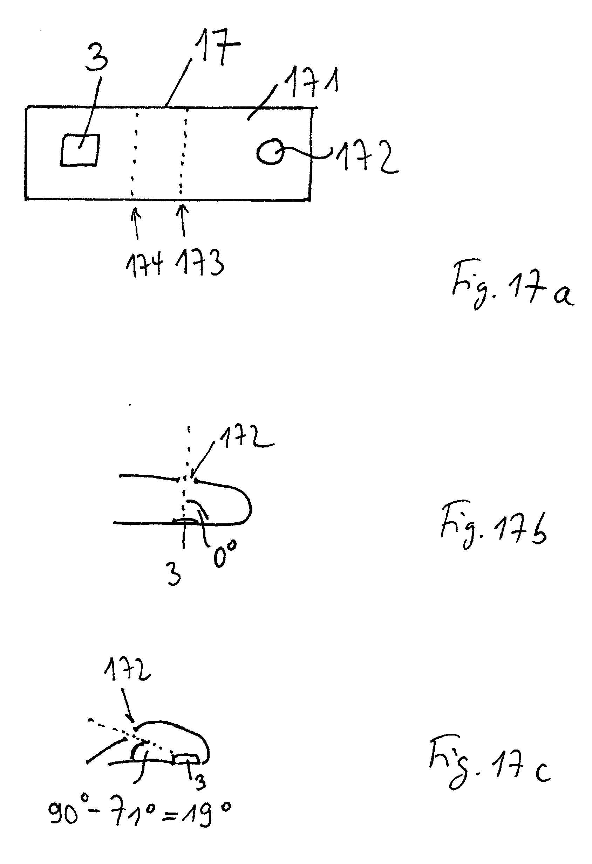

Fig. 17c          das Sicherheitsdokument aus Fig. 17a in einem zweiten gefalteten Zustand zur Wahrnehmung eines zweiten Effekts veranschaulicht.

Bei der vorliegenden Erfindung soll eine optisch variable Vorrichtung in Form eines Sicherheitselements bereitgestellt werden, das eine diffraktive Struktur trägt, durch die ein erstes, z. B. holographisches Bild (in zumindest Erster Beugungsordnung) bereitgestellt ist. Das Sicherheitelement kann in Form einer Transferfolie 1 bereitgestellt sein, auch als eine durch eine von der Transferfolie 1 auf ein Substrat 20 übertragene Übertragungslage für ein Sicherheitsdokument 2. Das Substrat 20 kann beispielsweise Papier oder ein Papier-Plastik-Hybridmaterial (z. B. für eine Banknote oder eine Passseite) sein, Plastik (z. B. für eine ID-Karte), Karton (z. B. für eine Verpackung), Glas (z. B. für eine Flasche oder Flakon), Metall (z. B. für eine Verpackung). Papier-Plastik-Hybridmaterial sind z. B. Schichtaufbauten aus laminierten Papierschichten und Plastikschichten.

Die Transferfolie 1 weist eine Trägerfolie 10 auf, die beispielsweise aus PET oder BOPP besteht und eine Dicke von zwischen 5 und 50 $\mu$m aufweist. Auf der Trägerfolie 10 ist eine Ablöseschicht 11, z. B. aus Wachs bereitgestellt, die z. B. eine Dicke von 200 nm oder weniger aufweist. Auf der Ablöseschicht 11 befindet sich eine Replizierlackschicht 12 aus thermoplastischem oder mit Ultraviolett (UV) härtbarem Material in einer Dicke von z. B. 0,2 - 15 $\mu$m. Bei der Herstellung der Trägerfolie 1 wird in den Replizierlack 12 unter Verwendung beispielsweise eines metallischen Masters eine diffraktive Struktur 13 abgeformt, insbesondere in einem Rolle-zu-Rolle-Verfahren. Die diffraktive Struktur 13 wird mit einer Reflexionsschicht 14 versehen, die aus Metall oder einer hochbrechenden dielektrischen Schicht mit einem Brechungsindex von bevorzugt von über 1,5, bestehen kann, die einen Brechungsindexunterschied zur Replizierlackschicht von über 0,2 aufweist. Als Metall kann Aluminium vorgesehen sein, als hochbrechendes dielektrisches Material Zinksulfid. Die Reflexionsschicht hat eine Dicke von zwischen 10 nm und 300 nm. Auf der Reflexionsschicht 14 wird eine Klebstoffschicht 15 angeordnet, die z. B. zwischen 1 und 20 $\mu$m dick ist.

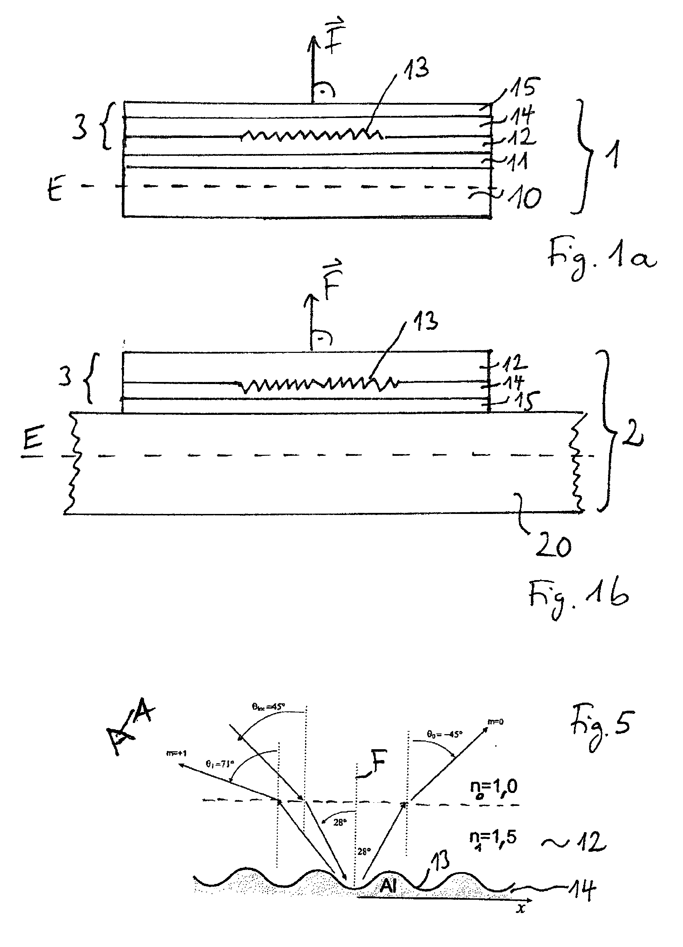

Nun wird die Transferfolie 1 in Kontakt mit dem Substrat 20 gebracht, der beispielsweise aus PET (Polyethylenterephthalat) besteht. Hierbei löst sich die sogenannte Transferlage 3 aufweisend die Replizierlackschicht 12, die Reflexionsschicht 14 und die Klebstoffschicht 15 wegen des Vorhandenseins der Ablöseschicht 11 von der Trägerfolie 10, und, ggf. durch ein Aktivieren des Klebstoffs durch Wärme oder UV-Strahlung und haftet mit der Klebstoffschicht 15 an dem Substrat 20, sodass man das in Fig. 1b gezeigte Sicherheitsdokument 2 erhält. Die Transferlage 3 kann auch in einen Schichtaufbau eines Substrats 20 eingebettet werden, z. B. in ein Papier-Plastik-Hybridmaterial oder in einen mehrschichtigen Plastik-Verbund (z. B. für eine ID-Karte).

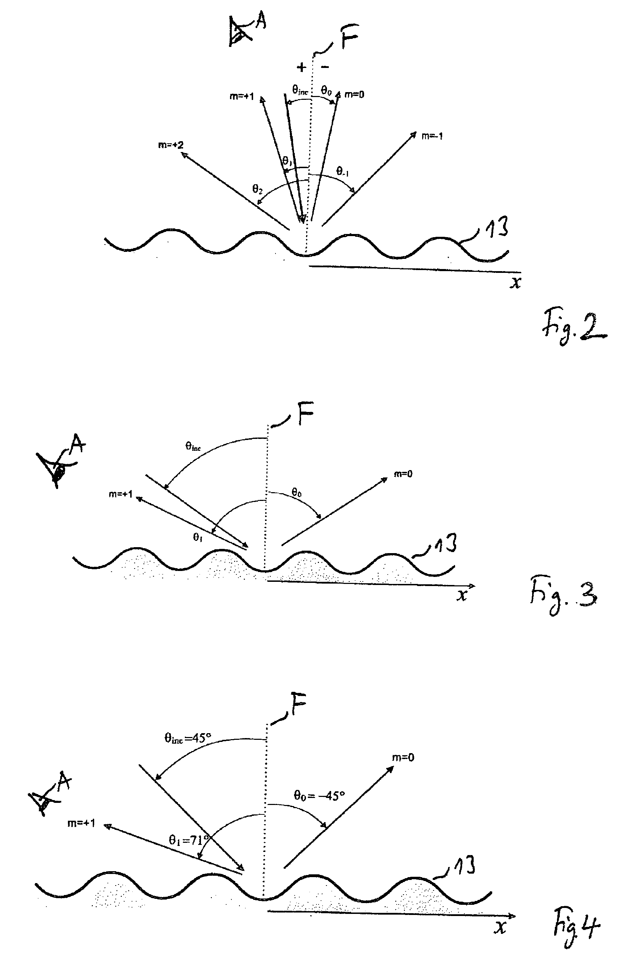

Die diffraktive Struktur 13 umfasst vorliegend zumindest ein Beugungsgitter. Es kann sich insbesondere um ein sinusförmiges Beugungsgitter handeln, wie es in den Figuren 2 bis 5 dargestellt ist.

Für ein solches Gitter gilt folgende Gittergleichung:

$$\frac{m\lambda}{d} = \sin\theta_m + \sin\theta_{inc}$$

Hierbei ist $\lambda$ die Vakuumwellenlänge von Licht einer bestimmten Farbe, d ist die Gitterperiode, und m ist die Beugungsordnung. $\theta_{inc}$ ist der Winkel, unter dem ein Lichtstrahl einfällt (Einfallswinkel, zur Flächennormalen F), und $\theta_m$ ist der Winkel, in dem Licht der m-ten Beugungsordnung gebeugt wird. Die Fig. 2 zeigt diese Größen an einem Beispiel. Die Flächennormale ist hierbei mit F bezeichnet. Es handelt sich um eine senkrecht auf der (Grund-) Ebene E des Sicherheitsdokuments bzw. seines Substrats 20 gedachte Gerade (oder einen Vektorpfeil). Die Tiefe des Beugungsgitters ist als gering gegenüber der Gesamtdicke des vorliegend als eben gedachten Substrats 20 anzusehen. Eine Flächennormale lässt sich auch definieren, wenn der Träger leicht gekrümmt ist, dann steht die Flächennormale senkrecht auf einer lokal ebenen Tangentenebene an dem jeweiligen Substrat.

Der Winkel $\theta_0$ ist der dementsprechend der Winkel, in dem das unter dem Winkel $\theta_{inc}$ einfallende Licht in die Nullte Beugungsordnung gelenkt wird, der Winkel $\theta_1$ ist der Betrachtungswinkel, in dem das Licht in die Erste Beugungsordnung gelenkt wird. Hierbei wird davon ausgegangen, dass die positive Angabe eines Winkels in der Figur links gezeigt ist, wohingegen der Winkel $\theta_{-1}$ ein negativer Winkel ist, der den Betrachtungswinkel zwischen der Flächennormalen F und der minus Ersten Beugungsordnung angibt. Der Winkel $\theta_2$ gibt den Betrachtungswinkel für die zweite Beugungsordnung an.

Aus der Gittergleichung lässt sich für eine bestimmte Wellenlänge A, eine bestimmte Beugungsordnung m, einen bestimmten Einfallswinkel $\theta_{inc}$ und einen bestimmten Ausfallswinkel $\theta_m$ für die Erste Ordnung (Betrachtungswinkel, m=1) die Gitterperiode (Gitterkonstante) ableiten.

Im Stand der Technik ist es üblich, ein optisch variables, z. B. holographisches Bild aus Beugungsgittern zu bilden, die unter einem Betrachtungswinkel von 0° in Erster Ordnung angesehen werden (m=1, $\theta_1 = 0°$), wobei das Licht unter einem Winkel von 45° einfallen muss, damit man diese Beugungsordnung sieht ($\theta_{inc} = 45°$). Man blickt also senkrecht auf das Hologramm, also längs der Flächennormalen F, während das Licht von oben im Winkel von 45° zur Flächennormalen F einfällt.

Für unterschiedliche Farben und daher unterschiedliche Wellenlängen ergeben sich unterschiedliche Gitterperioden und damit unterschiedliche Liniendichten für das Gitter. Diese sind in der nachfolgenden Tabelle 1 angegeben:

Tabelle 1:

| Farbe | Wellenlänge | Periode | Liniendichte |
|-------|-------------|---------|--------------|
| Rot | 640 nm | 905 nm | 1105 l/mm |
| Grün | 545 nm | 771 nm | 1297 l/mm |
| Blau | 455 nm | 643 nm | 1554 l/mm |

Mit anderen Worten liegt die Gitterperiode zwischen ca. 600 nm und ca. 1000 nm (= 1 $\mu$m).

Die Technologie zur Herstellung solcher Gitter ist verbreitet. Vorliegend soll die Herstellung des holographischen Bildes erschwert werden.

Nun wird durch mathematische Überlegungen anhand der Gittergleichung ersichtlich, dass der Wert, der sich auf der rechten Seite der Gittergleichung ergibt, größer wird, wenn man den Wert von $\theta_m$ erhöht (Maximum liegt bei 90°). Entsprechend verringert sich die Gitterperiode und erhöht sich die Liniendichte. Gleiches gilt bei einer Erhöhung von $\theta_{inc}$.

Gitter mit einer kleineren Gitterperiode sind aber schwerer herstellbar und daher schwerer zu fälschen.

Daher versucht man gemäß Fig. 3, einen eher höheren Einfallswinkel $\theta_{inc}$ zu wählen und einen eher höheren Betrachtungswinkel $\theta_1$ für die Erste Beugungsordnung.

Neben der Tatsache, dass ein Hologramm mit derartigen Eigenschaften schwerer zu fälschen wäre, kann als Vorteil auch angegeben werden, dass das Hologramm sich dem Betrachter nicht aufdrängt, sondern erst nach einer gezielten Suche sichtbar ist. Es handelt sich somit um ein Sicherheitsmerkmal, das insbesondere einem Kenner zugänglich ist.

Anhand von Fig. 4 werden nun konkrete Zahlenwerte diskutiert:

Hier ist ein Einfallswinkel $\theta_{inc}$ von 45° und ein Betrachtungswinkel von $\theta_1$ von 71° gezeigt. Für diesen Fall lässt sich nun anhand der Gittergleichung abermals eine Berechnung durchführen, mit folgendem Ergebnis:

Tabelle 2:

| Farbe | Wellenlänge | Periode | Liniendichte |
|-------|-------------|---------|--------------|
| Rot | 640 nm | 387 nm | 2581 Linien/mm |
| Grün | 545 nm | 330 nm | 3031 Linien/mm |
| Blau | 455 nm | 275 nm | 3631 Linien/mm |

Insbesondere Gitter mit einer Liniendichte bzw. Spatialfrequenz von mehr als 2000 Linien/mm bieten einen besonders hohen Fälschungsschutz.

Bei einem Einfallswinkel $\theta_{inc}$ von 45° in einem Betrachtungswinkel von $\theta_1$ von 71°, gibt es nur noch die Nullte Ordnung als weitere Ordnung, nicht aber die minus Erste Ordnung, denn diese breitet sich nicht aus (wird in die Ebene des Schichtenaufbaus hinein gebeugt) und ist daher für den Betrachter nicht mehr sichtbar. Wir haben es also bei den genannten Winkeln mit der Situation zu tun, dass ausschließlich eine Erste Beugungsordnung zu sehen ist, und eben bei einem besonders hohen Betrachtungswinkel. Der Unterschied zwischen dem Einfallswinkel $\theta_{inc}$ und dem Betrachtungswinkel $\theta_1$ beträgt 26° und liegt daher in einem Bereich von zwischen 20° und 60°. Der Unterschied zwischen $\theta_0$ und $\theta_1$ ist größer als 90°.

Die bisherigen Überlegungen gingen davon aus, dass das Gitter 13 unmittelbar in Kontakt mit der Luft (im Wesentlichen mit der Vakuumbrechungszahl n = 1,0) ist.

Bei dem oben unter Bezug auf die Figur 1b beschriebenen Schichtaufbau ist allerdings noch die Replizierlackschicht zu berücksichtigen, beispielsweise eine Polymerschicht (thermoplastisches Material), die mit der Reflexionsschicht 14 (z. B. aus Aluminium) überzogen ist.

Wie aus Fig. 5 zu sehen, entsprechen den Winkeln $\theta_{inc}$ und $\theta_1$ aufgrund einer Brechung an der Oberfläche zwischen der Luft und der Replizierlackschicht 12 kleinere Winkel $\theta_{inc,n1}$ und $\theta_{1,n1}$ im Inneren der Replizierlackschicht.

Für den Übergang zwischen der Reflexionsschicht 14 und der Replizierlackschicht 12 gilt somit für diese modifizierten Größen die Gittergleichung:

$$n_1 \sin \theta_{m,n_1} = n_1 \sin \theta_{inc,n_1} + m \frac{\lambda_0}{d}$$

$\lambda_0$ ist hierbei nunmehr die Wellenlänge des Lichts im Vakuum.

Nach dem Brechungsgesetz von Snellius ergeben sich im Übergang zwischen einem Material mit dem Brechungsindex $n_1$ und der Luft ($n_0 = 1$) folgende Beziehungen:

$$n_1 \sin \theta_{m,n_1} = \sin \theta_m$$

$$n_1 \sin \theta_{inc,n_1} = \sin \theta_{inc}$$

Setzt man dies in die obige Gittergleichung ein, erhält man wieder die ursprüngliche Gittergleichung.

$$\sin \theta_m = \sin \theta_{inc} + m \frac{\lambda_0}{d}$$

Die vorliegend gemachten Betrachtungen sind daher auch bei einem Sicherheitselement der oben beschriebenen Art (Transferfolie 1) oder beim Sicherheitsdokument 2 gültig.

In der Tabelle 2 sind die Gitterperioden bzw. Spatialfrequenzen für Beugungsgitter angegeben, die für unterschiedliche Farben gelten.

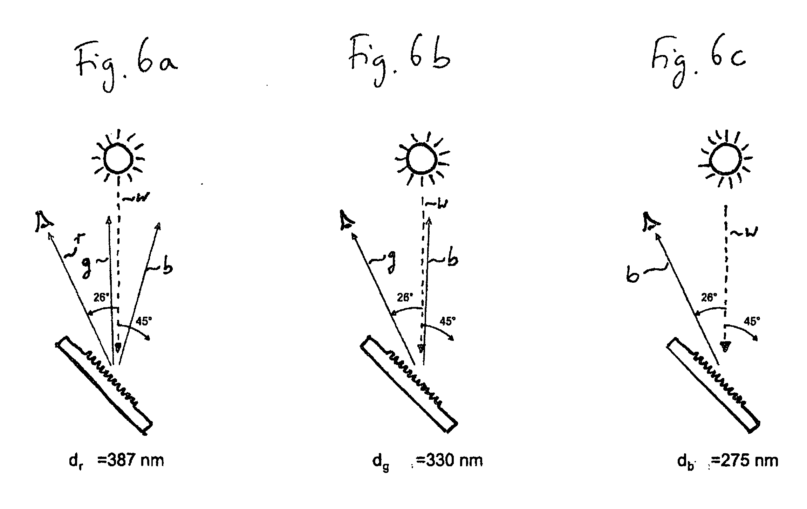

Anhand der Figuren 6a bis 6c erläutern wir nun, wie sich unterschiedliche Gitterabstände auf das Beugungsverhalten auswirken:

Bei einem für rot ("r") optimierten Gitterabstand $d_r$ von 387 nm wird gemäß Fig. 6a weißes Licht ("w") in seinem roten Anteil genau in einem Winkel von +71° zur Flächennormalen gebeugt, wenn das Licht in einem Winkel von 45° zur Flächennormalen einfällt. Zwischen dem einfallenden Licht und dem roten gebeugten Licht liegt also ein Winkel von 26°, wie in Fig. 6a gezeigt. Der grüne Anteil ("g") wird nicht ganz so weit gebeugt, der blaue Anteil ("b") sogar in die entgegengesetzte Richtung näher zur Flächennormalen hin.

Bei einem Gitterabstand dg von 330 nm wird von dem weißen Licht ein grüner Anteil abermals in den Winkel von 26° (gemessen vom Einfallswinkel, 71° gemessen von der Flächennormalen) gebeugt, der blaue Anteil nahezu im Spiegelreflex zurück. Der rote Anteil wird nicht gebeugt.

Bei einem Gitterabstand $d_b$ von 275 nm wird gemäß Fig. 6c von dem weißen Licht w der blaue Anteil in den Betrachtungswinkel von 71° gebeugt (also weitere 26° zu den 45° des Einfallswinkels), wohingegen es keinen roten und auch keinen grünen Anteil gibt.

Will man das Sicherheitselement oder Sicherheitsdokument nun unter besagtem Betrachtungswinkel von 71° bei Lichteinfall unter 45° betrachten und hierbei ein Bild sehen, das farbig ist, dann kann man einfach in mehreren Teilbereichen des Sicherheitselements bzw. der diffraktiven Struktur 13 unterschiedliche Beugungsgitter, eben mit unterschiedlichen Gitterabständen, vorsehen. Einen Bereich, der rot erscheinen soll, wird man mit einem Beugungsgitter mit dem Abstand $d_r$ versehen, für einen grün erscheinenden Bereich wird man den Gitterabstand dg wählen, und für einen blau zu erscheinenden Bereich den Gitterabstand $d_b$.

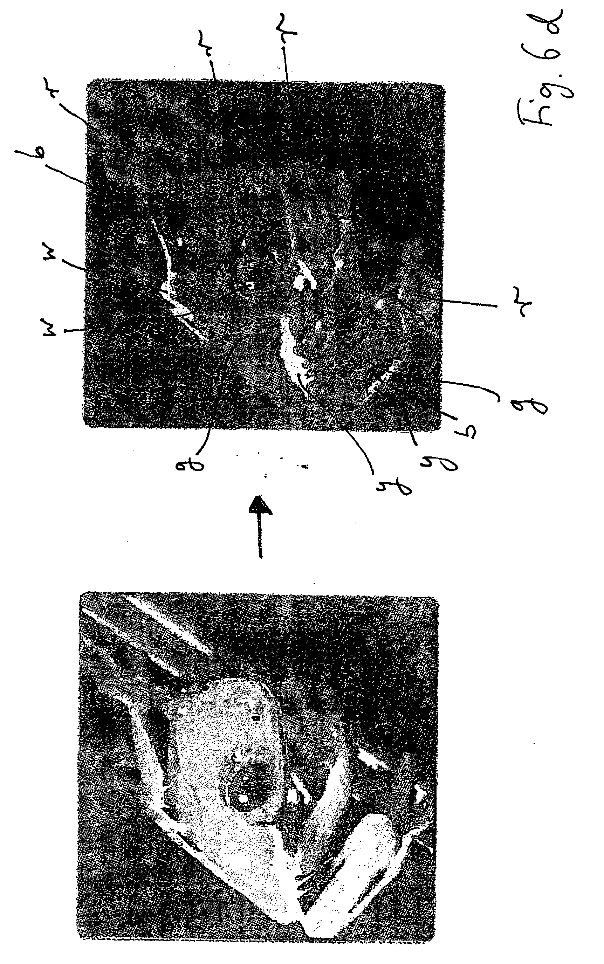

Anhand der Fig. 6d wird nun anhand eines beispielhaften Bildes erläutert, wie dies genau realisiert werden kann:

In der Figur 6d ist auf der linken Seite ein Bild eines Frosches gezeigt, gemäß einer Draufsicht in Richtung der Flächennormalen. Hier erscheint der Frosch nicht farbig, sondern schwarz-weiß, man sieht ein wenig bestimmte Konturen. (Die Konturen werden durch Verwendung herkömmlicher Strukturen, wie z. B. isotroper Mattstrukturen, anisotroper Mattstruktur und Spiegel, Sinusgitter mit großer Periode etc. sichtbar). Der herkömmliche TRUSTSEAL®-Effekt wird mit einem bei verkipptem Winkel sichtbaren Hologramm kombiniert in einer Rasterung. Es handelt sich hierbei um ein lineares Raster mit einem Rasterabstand von 300 $\mu$m, wobei die Linien der das Hologramm bereitstellenden Strukturen 150 $\mu$m breit sind und sich mit den TRUSTSEAL®-Strukturen abwechseln, die die weiteren 150 $\mu$m der Rasterweite einnehmen.

Verkippt man nun das Sicherheitselement mit dem Bild des Frosches um 71°, so erscheinen plötzlich mehrere Farben: In rot erscheinende Bereiche sind mit "r" gekennzeichnet, in blau erscheinende Bereiche mit "b", der Frosch ist größtenteils grün (Bereiche "g"), und manche Bereiche sind gelb ("y" für "yellow"), und manche Bereiche erscheinen weiß ("w").

Hier ist den jeweiligen Flächenbereichen genau eine Art von Beugungsgitter zugeordnet, gemäß dem oben anhand der Figuren 6a bis 6c erläuterten Rezept. Auch zu dem gelben Bereich kann ein gesondertes Beugungsgitter vorgesehen sein. Der weiße Bereich kann ein besonders strahlungsintensiver gelber Bereich sein.

Die Abmessungen auf dem Bild sind jeweils größer als 500 $\mu$m und daher für das menschliche Auge ohne Hilfsmittel ohne Weiteres erkennbar.

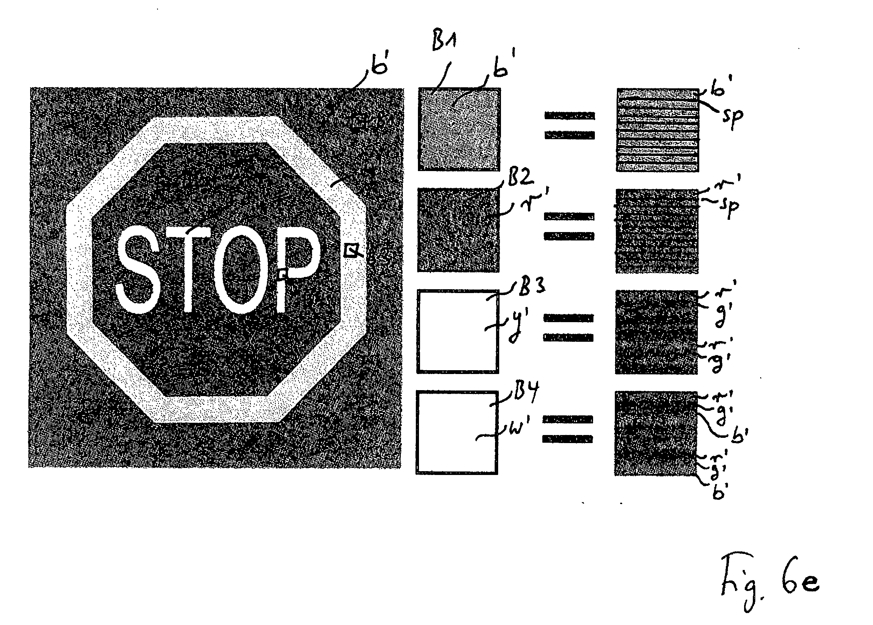

Bei einer anderen Ausführungsart der Bereitstellung eines farbigen Bildes wird vorgegangen, wie nachfolgend anhand Fig. 6e erläutert.

Hier soll ein Stoppschild mit roter Grundfläche, gelbem Rahmen, weißer Beschriftung "Stop" und blauem Hintergrund dargestellt werden.

Um hier nun die Farbe gelb bereitzustellen, mischt man den visuellen Eindruck, der von einem in die erste Beugungsordnung unter dem Winkel von 71° rot beugenden Gitter erzeugt wird, mit dem Effekt eines unter denselben Bedingungen grün beugenden Gitters. Wie in Fig. 6e rechts für einzelne Bildpunktbereiche B1, B2, B3 und B4 zu sehen, werden die Beugungsgitter hierbei in Form von Zonen als unterschiedliche Streifen bereitgestellt. Die Länge der Streifen ist unerheblich, aber die Breite der Streifen, also die Abmessung in der Richtung längs der sich die unterschiedlichen Streifen abwechseln, beträgt weniger als 300 $\mu$m, z. B. 100 $\mu$m, 150 $\mu$m, 200 $\mu$m oder sonst aus dem Intervall von zwischen 100 $\mu$m und 200 $\mu$m. Damit ist aber die Breite einer Zone also eines Streifens durch das menschliche Auge ohne Hilfsmittel nicht auflösbar. Im menschlichen Auge mischen sich die Farben rot und grün ("r'", "g'") zur Farbe gelb ("y'") (additive Farbmischung). Die Zielfarbe erreicht man durch geeignete Einstellung der relativen Flächenanteile der einzelnen Streifen (der Komponentengitter).

Genauso kann das weiße Licht ("w'") durch das Bereitstellen jeweils von Gruppen dreier Streifen aus rot, grün und blau beugendem Beugungsgitter bereitgestellt werden.

Die Farben Blau und Rot werden jeweils durch einen Typus von Beugungsgitter bereitgestellt, hierbei befindet sich zwischen einzelnen Streifen des Gitters jedoch ein Bereich ohne Gitter ("sp"), z. B. ein Spiegel, eine Mottenaugenstruktur, eine Mattstruktur, oder ähnliches. Durch Variation der Breite der Streifen des blau beugenden Beugungsgitters und des Bereichs sp ohne Beugungsgitter kann die Helligkeit eingestellt werden. In entsprechender Weise wird auch die Farbe Rot bereitgestellt, gegebenenfalls mit variierender Helligkeit.

Das anhand der Fig. 6e erläuterte Bild kann insbesondere als Echtfarbenbild ausgestaltet sein. Bei einem Echtfarbenbild geht man von einer Vorlage aus und versucht, diese durch ein Hologramm oder eine sonstige optisch variable Vorrichtung zu imitieren. Entsprechen die Farben des Hologramms bzw. der Vorrichtung genau denen der Vorlage, dann handelt es sich um ein Echtfarbenbild.

Damit nicht nur die Farben naturgetreu wiedergegeben werden, sondern auch die Helligkeit optimal wiedergegeben wird, kann man auch die Tiefe der Beugungsgitter variieren und/oder Bereiche sp ohne Beugungsgitter ergänzt werden.

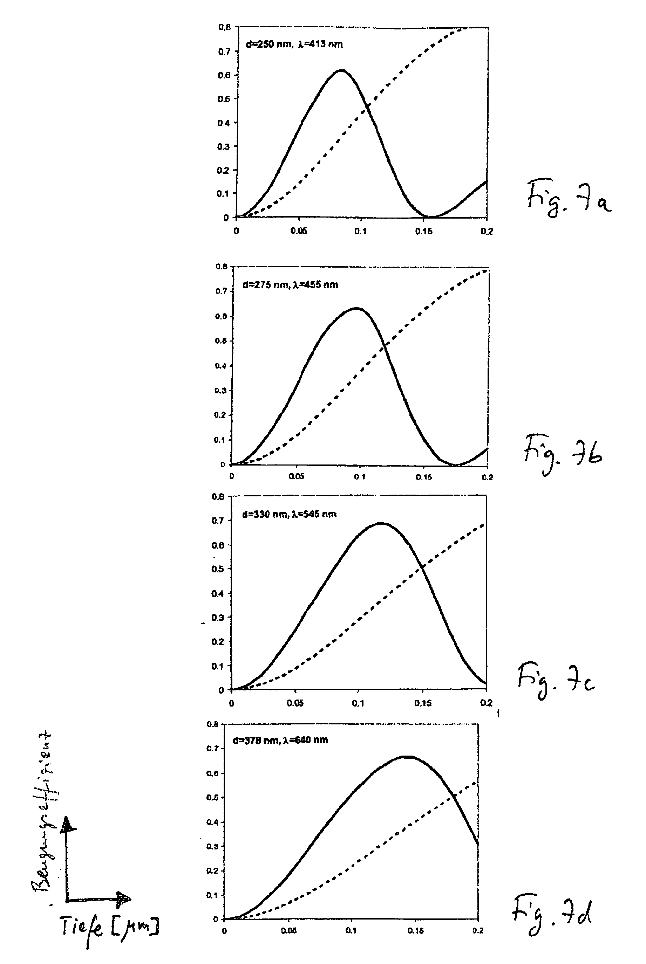

Die Fig. 7a bis 7d zeigen für unterschiedliche Gitterabstände und Wellenlängen die Abhängigkeit der Beugungseffizienz für zwei unterschiedliche Polarisationsmoden von der Tiefe. Die gezeigte Abhängigkeit beruht auf einer Berechnung, bei der von einem Übergang zwischen Kunststoff (n = 1,5) und Aluminium ausgegangen ist. Bei der Berechnung nimmt der Strahl einen Winkel zum Kunststoff von 28° ein, sodass der Einfallswinkel im Übergang von Licht und Kunststoff genau 45° beträgt. Beim TE-Modus (transvers elektrisch) befindet sich der elektrische Feldvektor parallel zu den Furchen des Gitters. Beim TM-Modus (transvers magnetisch) befindet sich der elektrische Feldvektor senkrecht zu den Gitterfurchen.

Mit durchgezogener Linie ist die Abhängigkeit für die TM-Mode gezeigt, mit gestrichelter Linie die Abhängigkeit für die TE-Mode. Fig. 7a zeigt die Situation für einen Gitterabstand von 250 nm, dem eine Wellenlänge von 413 nm entspricht. Fig. 7b zeigt die Abhängigkeit für einen Gitterabstand von 275 nm, dem eine Wellenlänge von 455 nm entspricht. Fig. 7c zeigt die Abhängigkeit für einen Gitterabstand von 330 nm, dem eine Wellenlänge von 545 nm entspricht, Fig. 7d zeigt die Abhängigkeit für einen Gitterabstand von 378 nm, dem eine Wellenlänge von 640 nm entspricht.

Wie eindeutig aus den Figuren hervorgeht, weisen die einzelnen Kurven für die TM-Mode jeweils ein Maximum auf. Die Kurve für die TE-Mode steigt innerhalb des Tiefenbereichs der Berechnung stetig an.

Man kann nun die Tiefe der Gitter mit der jeweiligen Gitterkonstanten so wählen, dass man genau das Maximum für die TM-Mode erreicht und damit eine möglichst gute Lichtausbeute nach dem gewählten Kriterium erzielt. Bei Wahl der jeweils optimalen Tiefe erhält man nahezu denselben Wert für die Lichteffizienz; dieser liegt zwischen 62 % und 68 %. Die Zahlenwerte sind in Tabelle 3 angegeben.

Tabelle 3:

| Farbe unter Betrachtung von 71° | Wellenlänge | Gitterperiode | Optimale Tiefe | 1. Maximum in der Beugungseffizienz der Mode TM |
|---|---|---|---|---|
| Violett | 413 nm | 250 nm | 85 nm | 62 % |
| Rot | 640 nm | 387 nm | 150 nm | 66 % |
| Grün | 545 nm | 330 nm | 120 nm | 68 % |
| Blau | 455 nm | 275 nm | 95 nm | 63% |

Hat man nun unter Verwirklichung einer oder mehrere der genannten Maßnahmen ein Echtfarbenbild generiert, so ist es für den Betrachter natürlich eine Aufgabe, genau den richtigen Betrachtungswinkel von vorliegend 71° einzustellen. Hier kann ihm ein sogenanntes Bezugselement helfen.

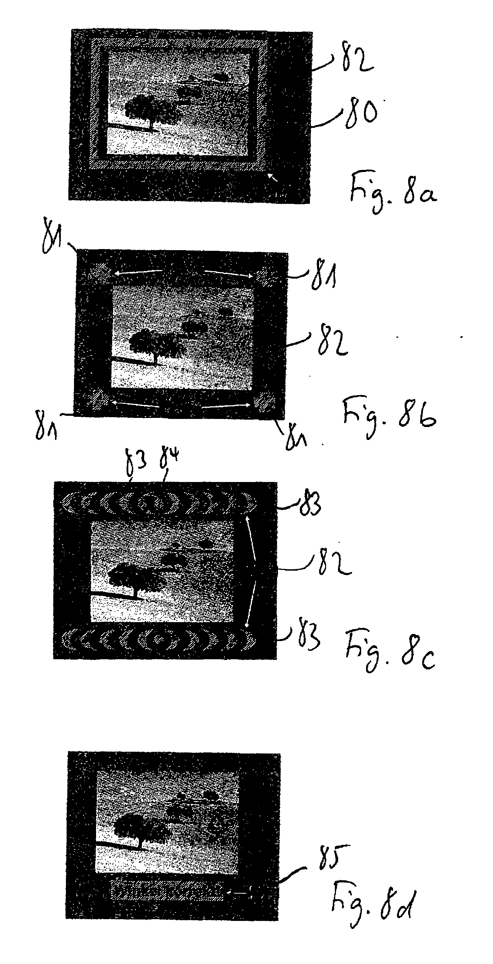

Vorliegend kann das Bezugselement insbesondere ein in violetter Farbe ausgestaltetes Element sein (Spatialfrequenz von zwischen 4000 Linien/mm und 5000 Linien/mm). Die Figuren 8a bis 8d zeigen unterschiedliche Ausgestaltungsformen für das Bezugselement:

Das Bezugelement gemäß Fig. 8a ist ein violetter Rahmen 80. Erscheint dem Betrachter dieser violette Rahmen 80 um das Echtfarbenbild 82 herum farbig, nämlich violett, dann hat er den richtigen Betrachtungswinkel gewählt. Bei anderen Winkeln außerhalb des Betrachtungswinkels sieht der Betrachter den Rahmen gar nicht oder als schwarze Fläche auf schwarzem Untergrund, also kaum abgehoben.

Bei der Ausführungsform gemäß Fig. 8b besteht das Bezugselement aus vier Kreuzen 81 an den Ecken des Echtfarbenbildes 82.

Bei der Ausführungsform gemäß Fig. 8c besteht das Bezugselement aus zwei Serien von Halbmonden 83 oberhalb und unterhalb des Echtfarbenbildes 82, wobei fünf Halbmonde 83 nach links offen ausgebildet sind und fünf Halbmonde 83 nach rechts offen ausgebildet sind und in der Mitte ein Punkt 84 gezeigt ist.

Es ist auch möglich, dass die Halbmonde jeweils eine unterschiedliche AzimutAusrichtung haben, dass z. B. der ganz links befindliche Halbmond - 50° hat, der darauf folgende - 40°, der dritte - 30° etc., bis schließlich der Halbmond ganz rechts einen Azimutwinkel von + 50° hat. Der Punkt 84 in der Mitte ("Vollmond") könnte mit demselben Gitter ausgebildet sein (für violett), aber mit einem Azimut von 0°. Betrachtet man das Hologramm von schräg, aber mit der falschen Azimutausrichtung

(von 0° verschieden), dann dienen die Halbmonde als Leitlinie, um den hellen Punkt 84 korrekt aufzufinden und damit den korrekten Azimutwinkel von 0° einzustellen, wo man dann das Vollfarbenbild erkennt.

Bei der Ausführungsform gemäß Fig. 8d wird durch das Bezugselement 85 die Kontur einer Schrift wiedergegeben, die die Angabe gibt "Winkel korrekt". Die Buchstaben der Schrift sind hierbei durch Auslassungen in den Bezugselement 85 bereitgestellt. Diese Buchstaben sind nur dann oder nur dann ausreichend gut zu lesen, wenn der eingestellte Kippwinkel bzw. Betrachtungswinkel korrekt ist, wie durch die Schrift auch selbst ausgesagt.

Durch die Bezugselemente 80, 83, 84 und 85 wird eine Zusatzinformation bereitgestellt. Im Ausführungsbeispiel gemäß Fig. 8d besteht diese Information in einer semantischen Bedeutung.

In Abwandlung aller Ausführungsformen gemäß den Fig. 8a bis 8d kann als Bezugselement auch ein Teil des Bildes vorgesehen sein. Beispielsweise könnte in dem Bild eine violette Blume oder Blüte (Lavendelbusch oder ähnliches) gezeigt sein. Dem Betrachter muss dann mitgeteilt werden, dass wenn dieser Lavendelbusch richtig zu sehen ist, dann auch das Echtfarbenbild insgesamt farbenecht zu sehen ist.

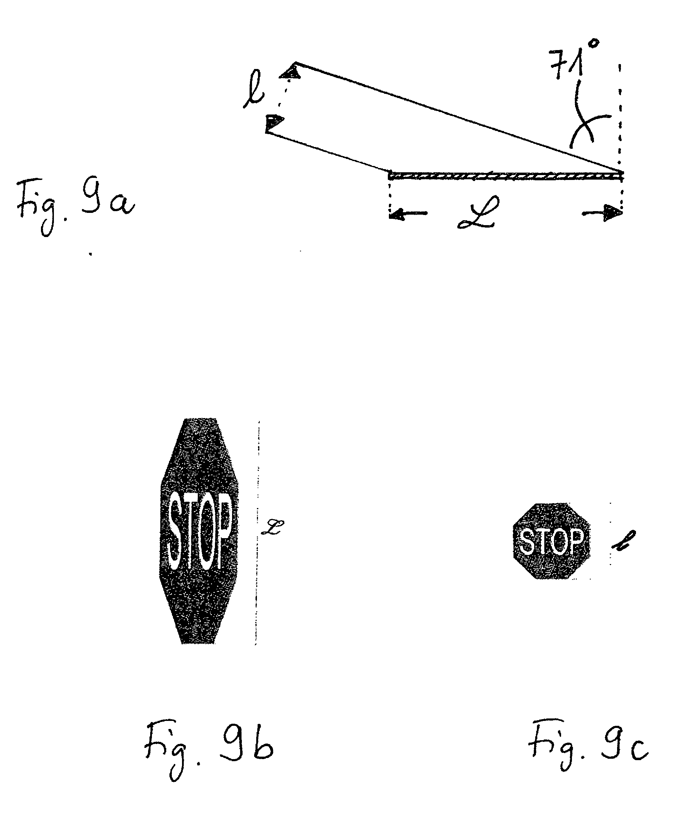

Bei besonders hohem Betrachtungswinkel kommt es nun zu einer Verzerrung des dargestellten Bildes im Vergleich zur Betrachtung senkrecht zur Bildebene. Dies wird anhand von Fig. 9a verdeutlicht: Hat das Bild die Länge L, dann hat es unter einem Betrachtungswinkel von 71° lediglich die sichtbare Höhe *l*.

Hier tritt nun eine Zusatzidee hinzu: Will man die Erfindung so ausführen, dass das betrachtete Bild der Vorlage entspricht und dann unverzerrt ist, dann muss man das Bild gesehen von der Flächennormalen verzerrt vorsehen. Im einfachen Fall wird diese Verzerrung durch eine Streckung bereitgestellt, siehe die Situation gemäß Fig. 9b, die das Hologramm von oben gesehen zeigt, um bei Betrachtung im Betrachtungswinkel von 71° das Bild unverzerrt darzustellen gemäß Fig. 9c. Der Streckungsfaktor beträgt hierbei ungefähr 3, denn es gilt:

$$\cos(71°) = \frac{l}{L}$$

$$L = \frac{l}{\cos(71°)} \approx 3l$$

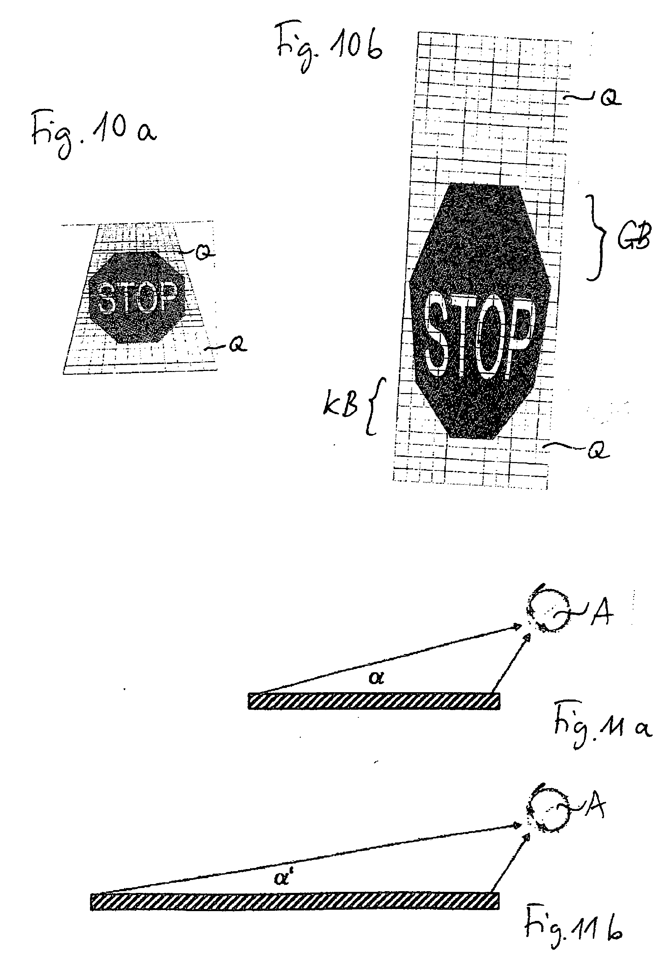

Zur Steigerung dieser Vorgehensweise kann man auch noch die Perspektive berücksichtigen. Hierbei teilt man die Fläche gesehen in Draufsicht in kleine Quadrate Q als Bildelemente ein (Fig. 10b) und berechnet, wie sich diese Quadrate Q in dem Bild bei Betrachtung aus dem Betrachtungswinkel von 71° zeigen (Fig. 10a). Damit man das Bild aus Fig. 10a ohne Verzerrungen erhält, muss man in der Draufsicht das Bild aus Fig. 10b bereitstellen. Man berechnet hierbei, z. B. numerisch unter Computereinsatz, eine Transformationsfunktion, die die Abbildung von der Draufsicht in die Abbildung im Betrachtungswinkel von 71° transformiert. Dann unterzieht man die Vorlage der Inversen dieser Transformationsfunktion, etwa auch numerisch, im Beispielsfall erhält man somit das Bild aus Fig. 10b. Dadurch, dass auf diese Inverse dann bei Betrachtung im Betrachtungswinkel von 71° dann wieder die Transformationsfunktion wirkt, hebt diese die Inverse auf, und es erscheint das unverzerrte Bild.

Damit das Bild aus Fig. 10a außerdem gleichmäßig dort hell erscheint, wo es gleichmäßig hell sein soll (z. B. im Bereich des roten Grundfeldes), muss man berücksichtigen, dass der obere Teil des Bildes durch einen größeren Bereich GB bereitgestellt ist, als der untere Teil des Bildes, der nur durch einen kleineren Bereich kB bereitgestellt ist. Bei einer gleichmäßigen Anordnung eines Beugungsgitters wäre im größeren Bereich GB "mehr Beugungsgitter" vorhanden, und der obere Teil des Bildes würde in dem projizierten Bild gemäß Fig. 10a heller leuchten. Aus diesem Grund sieht man bevorzugt in dem jeweils mehr verzerrten Bereich (der weiter von dem Betrachter entfernt ist) eine Verringerung der Dichte des Beugungsgitters vor. Im Beispielsfall der Fig. 6e würde man somit in dem von dem Betrachter weiter entfernten Bereich einen größeren Bereich sp zur Bereitstellung der roten Farbe vorsehen, und im nicht so weit entfernten Bereich den Flächenanteil des Bereichs sp verringern und die Dichte des rot in die Betrachtungsrichtung beugenden Beugungsgitters erhöhen. Genauso kann man auch die Tiefe der Beugungsgitter variieren, ggf. auch den Azimutwinkel eines Lineargitters und eines Kreuzgitters verkippen, damit die Helligkeit variiert wird, oder ähnliche Maßnahmen treffen.

Bei noch weiterer Steigerung kann man berücksichtigen, dass das Bild eine endliche (relativ große) Ausdehnung hat: Während Licht von der Unterkante des Bildes in einem bestimmten Winkel auf das menschliche Auge A auftrifft, trifft Licht von der Oberkante in einem anderen Winkel $\alpha$ auf, siehe Situation gemäß Fig. 11a. Dieser Effekt ist insbesondere dann stark, wenn man es mit einer kollimierten Beleuchtung zu tun hat und das Auge nur eine kleine Winkelöffnung aufweist. Vergrößert man das Bild, trifft das Licht von der Oberkante in einem Winkel $\alpha'$ auf. Hier kann man die Gitterperiode variieren, damit stets Licht gleicher Farbe auch unter den unterschiedlichen Betrachtungswinkeln gleich erscheint. Dies ist eine andere Maßnahme als die der Bereitstellung des Beugungsgitters mit einem vorbestimmten Gitterabstand in einer variierenden Dichte. Bei der genannten weiteren Maßnahme wird nicht die Dichte des Gitters zur optimalen Einstellung der Helligkeitsverteilung variiert, sondern die Gitterperiode selbst.

Die Idee eines nur in einem Betrachtungswinkel von mehr als 50°, bevorzugt mehr als 60°, besonders bevorzugt mehr als 70° zu sehenden (holographischen) Bildes, insbesondere Echtfarbenbildes, kann mit anderen Ideen kombiniert werden.

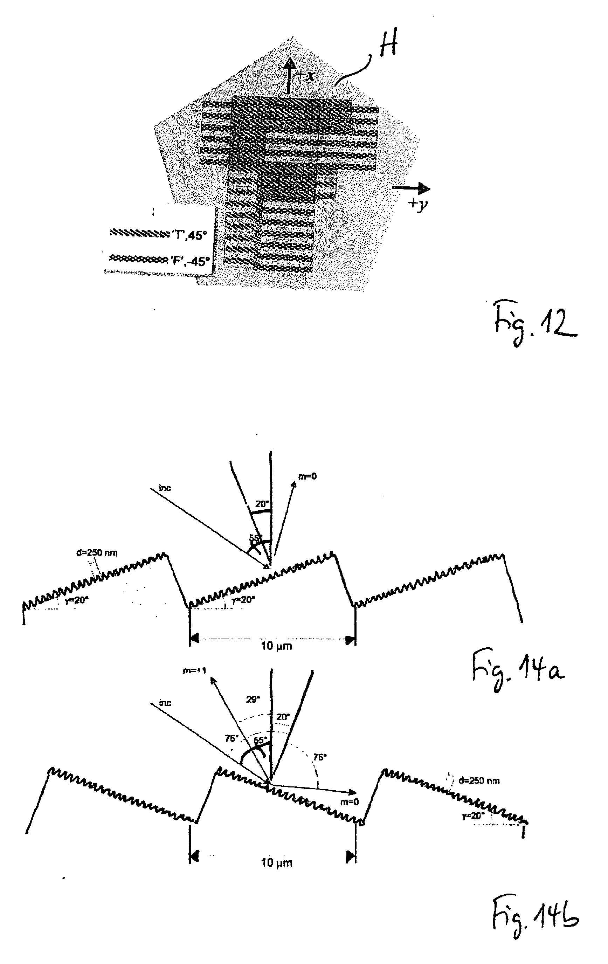

So können zwei (holographische) Bilder, insbesondere Echtfarbenbilder, ineinander verschachtelt werden. Die Figur 12 zeigt beispielhaft ein erstes Bild in Form eines "T", das mit einem Bild in Form eines "F" verschachtelt ist. Unter Verschachteln wird vorliegend verstanden, dass kleinste Elemente der Bilder einander abwechseln. Vorliegend sind dies einzelne Streifen der Bilder. Die Streifen haben besonders bevorzugt eine Rasterweite von weniger als 300 $\mu$m, sodass die Verschachtelung als solche gar nicht erkennbar ist. Neben dem bisher in Rede stehenden Betrachtungswinkel von 71° kann man das Bild noch in seiner Ebene drehen, nämlich um einen Winkel von - 45° oder + 45°. Bei Drehung um den Winkel von - 45° in der Bildebene (Azimutwinkel) erscheint das Bild des "F", bei Drehung um + 45° (Azimutwinkel) erscheint das Bild des "T".

Hier hat man es mit einem besonders gut verborgenen Sicherheitseffekt zu tun: Der Effekt wird nicht nur dann sichtbar, wenn man das Sicherheitselement um einen Winkel von 71° verkippt (wobei 71° der Winkel, um den die Flächennormale der Banknote vom Betrachter weggekippt wird, gemessen ausgehend von der horizontalen Stellung, wie in Fig. 6 gezeigt ist), sondern man muss es zusätzlich auch noch in der Bildebene drehen, um ein jeweiliges der beiden holographischen Bilder zu sehen.

Unter Variation dieser Ausführungsform kann vorgesehen sein, dass der Azimutwinkel bei dem ersten holographischen Bild 0° und beim zweiten holographischen Bild 90° (Azimut) ist.

Das Fünfeck im Hintergrund H kann als Referenzrahmen angesehen werden und hat beispielsweise eine Gitterlänge von 4000 Linien/mm und erscheint daher violett. Entweder ist dieses im Winkel von 0° azimut zu sehen, oder aber es besteht seinerseits aus miteinander verschränkten und verschachtelten Teilbereichen, die jeweils bei + und - 45° azimut zu sehen sind (wenn gleichzeitig der Kippwinkel von 71° eingestellt ist, also ein Winkel von 71° zwischen der einfallenden Strahlung und der Normalen der optisch variablen Vorrichtung).

Alternativ kann der Hintergrundbereich H als Kreuzgitter mit einer Linienbreite von 2828 Linien/mm ausgebildet sein. In diesem Fall ist anhand des Kreuzgitters erkennbar, wenn genau die richtigen Betrachtungsbedingungen vorherrschen, wenn also der Kippwinkel und der Azimutwinkel jeweils richtig auf 45° eingestellt sind.

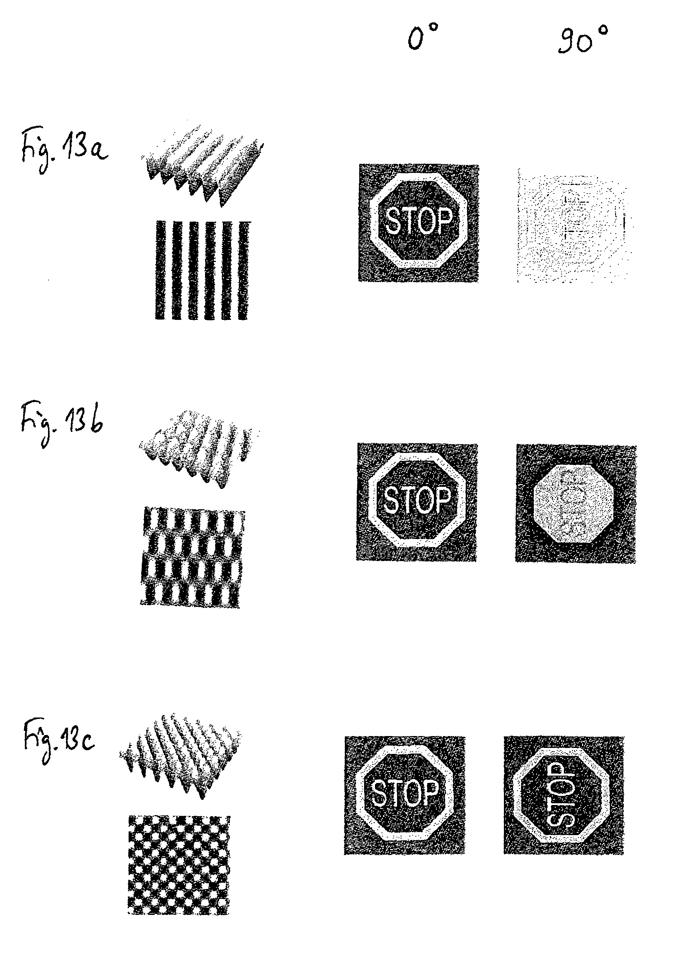

Die Idee des Umschaltens des Bildes ("Image flip") kann auch auf andere Art und Weise realisiert werden. Die Fig. 13a bis 13c zeigen unterschiedliche Arten von Beugungsgitter in der Perspektive (jeweils links oben), in der Draufsicht (jeweils links unten) und das hierdurch sichtbare Bild in Abhängigkeit vom Azimutwinkel (bei gleichzeitiger Verkippung um 71°), nämlich bei einem Azimutwinkel von 0° einerseits (in der Mitte jeweils) und von 90° andererseits (jeweils rechts).

Wie aus Fig. 13a ersichtlich, ist bei einem reinen Lineargitter das Bild nur bei einem Azimutwinkel von 0° (und gleichzeitiger Verkippung um 71°) zu sehen, und es verschwindet bei einer Drehung in der Ebene des Bildes um 90°. Dieser Effekt wirkt überraschend, weil das Bild gänzlich verschwindet, und kann als zusätzliches Sicherheitsmerkmal dienen.

Gleichermaßen kann bei einem Kreuzgitter gemäß Fig. 13b, bei dem die Gitterperiode in der einen Richtung größer ist als in der anderen Richtung das Bild bei einem Azimutwinkel von 0° (gleichzeitige Verkippung um 71°) farbenecht gesehen werden, bei einer Verdrehung um 90° jedoch in anderen Farben, wobei Teile des Bildes möglicherweise verschwinden können. Auch dieser Effekt kann als ein zusätzliches Sicherheitsmerkmal genutzt werden.

Schließlich kann bei einem Kreuzgitter, das in zwei Richtungen senkrecht zueinander die genau selbe Spatialfrequenz aufweist, ein und dasselbe Bild unabhängig davon immer gleich sichtbar sein, ob es in den Azimutwinkel 0° oder 90° gedreht ist. Auch dies ist ein Sicherheitsmerkmal, das nicht ohne Weiteres fälschbar ist. Bei anderen Azimutorientierungen, z. B. bei 45°, erhält man eine andere Farbe.

Bei einem nicht gezeigten Zirkulargitter ist dasselbe Bild bei allen Azimutwinkeln sichtbar.

Naturgemäß können die unterschiedlichen Arten von Beugungsgitter auch in Kombination in einem einzelnen Bild miteinander vorliegen.

Als weiteres Zusatzmerkmal kann man vorsehen, dass die Replizierlackschicht 14 die Form eines asymmetrischen Gitters hat, eines sogenannten Blaze-Gitters. Bei einem solchen Gitter gibt es eine Sägezahnform mit flacheren Flanken und steileren Flanken, wobei die flacheren Flanken länger sind. Die Eigenschaften des Blaze-Gitters werden durch den Anstiegswinkel der flacheren Flanken bestimmt (Blaze-Winkel). Vorliegend wird die diffraktive Struktur auf den flacheren Flanken vorgesehen, nicht aber auf den steileren Flanken. Beispielsweise hat das Blaze-Gitter eine Gitterperiode von 10 $\mu$m, die auf den flacheren Flanken angeordnete diffraktive Struktur eine Gitterperiode von 0,3 $\mu$m. Man hat somit auf den flacheren Flanken ca. 33 Gitterfurchen (Gittereinheiten) angeordnet.

Ein Blaze-Gitter hat die Eigenschaft, dass sich bei einer Drehung im Azimut (also um die Flächennormale zur Bildebene) der Effekt ändert, wobei die Drehung eine solche um 180° sein soll (anders als bei den zu Fig. 13a bis 13c erläuterten Effekten, bei denen die Drehung um 90° das Wesentliche ist).

Bei einem Verkippwinkel des Gitters um 55° gemäß Fig. 14a und Betrachtung längs 0° Azimut, sieht man beispielsweise keine Farbe. Wird das Gitter weiter in diesem Winkel von 55° gehalten und in seiner Ebene um 180° gedreht (Situation gemäß Fig. 14b), dann erscheint in Betrachtungsrichtung auf einmal die Erste Beugungsordnung und ein helles Echtfarbenbild ist sichtbar.

Diese Aussage gilt insbesondere für den Flankenanstiegswinkel der flacheren Flanke (sogenannten Blaze-Winkel) von mehr als 20°.

Bei einem Blaze-Winkel von 10° oder weniger ist es möglich, dass die optisch variable Vorrichtung (das holographische Bild) je nach dem Azimutwinkel, also je nach Situation gemäß Fig. 14a und 14b in unterschiedlichen Farben erscheint, wenn es zugleich um einen bestimmten Winkel gekippt ist.

Ein Bezugselement kann außerhalb des asymmetrischen Gitters vorgesehen sein und gewährleistet, dass der richtige Kippwinkel gewählt wird. Das gilt insbesondere dann, wenn das Bezugselement ein Beugungsgitter ist, das in der Ersten Ordnung violett erscheint (Spatialfrequenz von mehr als 4000 Linien/mm).

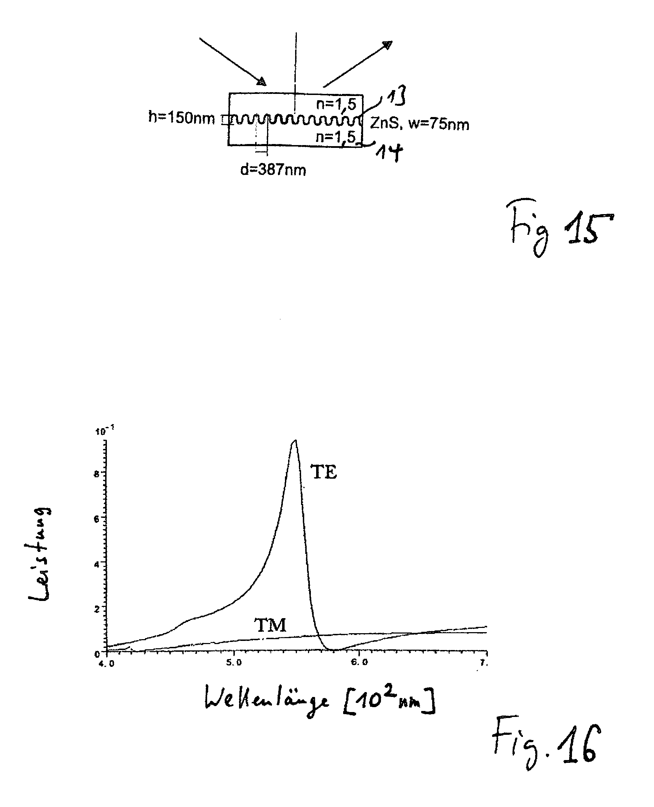

Wird die Reflexionsschicht 14 (Fig. 1 b) aus einem dielektrischen hochbrechenden Material, beispielsweise Zinksulfid, gebildet, kann man zusätzlich einen weiteren Effekt, einen sog. Resonanzeffekt erzielen. Dies gilt beispielsweise in der Situation mit den Abmessungen gemäß Fig. 15: Die Gittertiefe eines Gitters mit dem Gitterabstand von 387 nm beträgt hierbei 150 nm, und das Zinksulfid als Reflexionsschicht 14 weist eine Dicke von 75 nm auf. Bei geeigneter Abstimmung mit der Dicke der Replizierlackschicht entsteht ein Effekt Nullter Ordnung, wenn das Licht in einem Winkel von 25° einfällt (der im Kunststoff zu 16,3° gebeugt wird). Es gibt hier einen Resonanzeffekt bei der Wellenlänge der grünen Farbe (545 nm) und einen besonders starken Polarisationseffekt, siehe Fig. 16: Die Mode TE weist ein ausgeprägtes Maximum bei einer bestimmten Wellenlänge auf.

Das Gitter aus Fig. 15 erscheint auf diese Weise rot, wenn es verkippt betrachtet wird, und es erscheint grün, wenn es in Reflexion (im Spiegelreflex) betrachtet wird.

Es ist somit möglich, den genannten Effekt des Bereitstellens eines holographischen Bildes als Beugungsbild Erster Ordnung bei einem Verkippwinkel von mehr als 50° mit dem Bereitstellen eines Farbeffekts im Spiegelreflex zu kombinieren.

In Fig. 17a ist ein Sicherheitsdokument 17 dargestellt, dass das genannte Sicherheitselement 3 aufweist und zusätzlich einen in ein Fenster eines Substrats 171 integrierten Polarisator 172. Das Substrat 171 weist zwei Faltlinien 173 und 174 auf.

Wie in Fig. 17b schematisch dargestellt, lässt sich beim Falten längs der Faltlinie 173 der Polarisator 172 genau über das Sicherheitselement 3 halten und daher eine Betrachtungsrichtung gemäß der Flächennormalen verwirklichen. Hier kann man gegebenenfalls polarisiertes Licht durch den Polarisator 172 hindurch sehen oder umgekehrt das Sicherheitselements im Umkehrkontrast sehen, also sonst leuchtende Bereiche als dunkel erscheinend.

Anhand von Fig. 17c ist ersichtlich, dass man den Polarisator 172 auch, bei Falten des Sicherheitsdokuments 17 entlang der Faltlinie 174, so halten kann, dass man bei Betrachtung des Sicherheitselements 3 in dem genannten Betrachtungswinkel von 71° zur Flächennormalen den Effekt einer starken Polarisation des Lichts zur Überprüfung eines zusätzlichen Sicherheitsmerkmals nutzen kann. Gegebenenfalls kann in dem Sicherheitsdokument 17 noch ein lichtdurchlässiges Fenster vorhanden sein, damit das Sicherheitselement 3 aus dem richtigen Einfallswinkel beleuchtet ist (nicht in der Figur dargestellt).

Die vorliegend genannten Beispiele für Wellenlängen, Gitterabstände, etc. bei einem bestimmten Betrachtungswinkel von z. B. 71° sollen nicht als einschränkend verstanden werden. Die erfindungsgemäße Idee kann bei unterschiedlichen Betrachtungswinkeln $\theta_1$ größer 50°, bevorzugt größer 60°, besonders bevorzugt größer 70° verwirklicht werden. Andere hier genannte Größen müssen dann gegebenenfalls entsprechend angepasst werden.

Ein Betrachtungswinkel von größer als 50°, bevorzugt größer 60°, besonders bevorzugt größer als 70° wird bevorzugt bei Beugungsgittern verwirklicht, die für eine Wellenlänge von 650 nm mindestens 2000 Linien/mm aufweisen, bei einer Wellenlänge von 550 nm mindestens 2500 Linien/mm aufweisen, bei einer Wellenlänge von 450 nm mindestens 3000 Linien/mm aufweisen und bei einer Wellenlänge von 400 nm mindestens 3500 Linien/mm aufweisen.

Das Bild kann auch auf andere Weise als unter Bezug auf die Figuren 1a und 1 b skizziert hergestellt werden. So kann beispielsweise auch auf eine Replizierlackschicht verzichtet werden und die diffraktive Struktur unmittelbar in einem Träger abgeformt werden.

**Patentansprüche**

1. Sicherheitselement (1), insbesondere in Form einer Transferfolie (1), einer Laminierfolie oder eines Sicherheitsfadens, mit einer oder mehreren Schichten (12, 14, 15; 10), von denen zumindest eine erste Schicht (12) eine diffraktive Struktur (13) bereitstellt, durch welche unter einem vorbestimmten Einfallswinkel ($\theta_{inc}$) zu einer Flächennormalen (F) einfallendes Licht gebeugt wird, sodass für einen in einem vorbestimmten Betrachtungswinkel ($\theta_1$) zur Flächennormalen (F) blickenden Betrachter (A) ein erstes Bild als Beugungsbild Erster Ordnung erscheint, wobei die Flächennormale (F) eine Normale zu einer durch die erste Schicht (12) definierten Grundebene ist, und wobei die diffraktive Struktur (13) derart ausgebildet ist, dass der vorbestimmte Betrachtungswinkel größer als 50°, bevorzugt größer als 60°, besonders bevorzugt größer als 70° ist, **dadurch gekennzeichnet, dass** die diffraktive Struktur eine oder mehrere erste Zonen und ferner a) eine oder mehrere zweite Zonen und/oder b) eine oder mehrere dritte Zonen aufweist, wobei die diffraktive Struktur in jeder ersten Zone so ausgebildet ist, dass sie eine zugeordnete erste Wellenlänge des unter dem vorbestimmten Einfallswinkel einfallenden Lichts zur Ausbildung des Beugungsbilds Erster Ordnung in den vorbestimmten Betrachtungswinkel ($\theta_1$) beugt, die diffraktive Struktur in jeder zweite Zone so ausgebildet ist, dass sie eine zugeordnete zweite, von der ersten Wellenlänge verschiedene Wellenlänge des unter dem vorbestimmten Einfallswinkel ($\theta_{inc}$) einfallenden Lichts zur Ausbildung des Beugungsbildes Erster Ordnung in den vorbestimmten Betrachtungswinkel ($\theta_1$) beugt und wobei die diffraktive Struktur in jeder dritten Zone so ausgebildet ist, dass sie eine zugeordnete dritte, von der ersten und zweiten Wellenlänge verschiedene Wellenlänge des unter dem vorbestimmten Einfallswinkel ($\theta_{inc}$) einfallenden Lichts zur Ausbildung des Beugungsbilds Erster Ordnung in den vorbestimmten Betrachtungswinkel ($\theta_1$) beugt, sodass das erste Bild mehrfarbig erscheint.

2. Sicherheitselement nach Anspruch 1, bei dem die diffraktive Struktur (13) derart ausgebildet ist, dass das Beugungsbild Erster Ordnung in dem Betrachtungswinkel ($\theta_1$) bei einem vorbestimmten Einfallswinkel ($\theta_{inc}$) von größer als 30°, bevorzugt zwischen 40° und 50° erscheint und/oder bei dem der Betrachtungswinkel ($\theta_1$) von einem Winkel ($\theta_0$), in welchem das in dem vorbestimmten Einfallswinkel ($\theta_{inc}$) einfallende Licht in die Nullte Ordnung gebeugt wird, um einen Winkelabstand von mindestens 90° verschieden ist.

3. Sicherheitselement nach Anspruch 1 oder 2, bei dem erste Bereiche (r, g, b, y) der diffraktiven Struktur (13) entweder ausschließlich zumindest eine erste Zone (r) oder ausschließlich zumindest eine zweite Zone (g) oder ausschließlich zumindest eine dritte Zone (b) umfassen, und wobei die ersten Teilbereiche in allen in der Grundebene definierten Erstreckungsrichtungen eine Abmessung von größer als 300 $\mu$m, bevorzugt größer als 500 $\mu$m, besonders bevorzugt größer als 800 $\mu$m aufweisen.

4. Sicherheitselement nach einem der vorhergehenden Ansprüche, bei dem ein oder mehrere zweite Bereiche der diffraktiven Struktur (13) eine Vielzahl von Bildpunktbereichen (B1, B2, B3, B4) aufweisen, die in zumindest einer in der Grundebene definierten Erstreckungsrichtung Abmessungen der Rasterweite von kleiner als 300 $\mu$m, bevorzugt von zwischen 50 $\mu$m und 250 $\mu$m, besonders bevorzugt von 75 $\mu$m bis 150 $\mu$m, aufweisen, wobei zumindest einer der Bildpunktbereiche (B1, B2, B3, B4) zumindest zwei unterschiedliche Zonen (r', g', b') von ersten und/oder zweiten und/oder dritten Zonen umfasst, derart, dass sich das Licht der den zumindest zwei unterschiedlichen Zonen (r', g', b') zugeordneten Wellenlängen additiv mischt und sich für den Betrachter ein durch die additive Mischung bestimmter Farbeindruck des jeweiligen Bildpunktbereichs ergibt.

5. Sicherheitselement nach Anspruch 4, bei dem die diffraktive Struktur jeder der Zonen (r, g, b, r', g', b') als Beugungsgitter ausgebildet ist, das durch einen oder mehrere innerhalb der Zone konstante Gitterparameter aus der Gruppe von Spatialfrequenz, Azimutwinkel, Reliefform und Relieftiefe bestimmt ist, wobei bevorzugt eine oder mehrere der folgenden Maßnahmen vorgesehen ist:

   a) dass das Beugungsgitter umfasst:

   - ein Lineargitter und/oder
   - ein Schlangenliniengitter und/oder
   - ein Parabelliniengitter und/oder
   - ein Kreuzgitter mit unterschiedlicher Spatialfrequenz in unterschiedlichen Richtungen und/oder
   - ein Kreuzgitter mit gleicher Spatialfrequenz in zueinander senkrechten Richtungen und/oder
   - ein Zirkulargitter,

   b) dass alle Gitterparameter innerhalb jeder Zone jeweils konstant sind,
   c) dass die in Richtung der Flächennormalen definierte Relieftiefe der Beugungsgitter in Abhängigkeit von der jeweiligen, der Zone zugeordneten Wellenlänge derart gewählt ist, dass die Beugungseffizienz der Beugung von Licht dieser Wellenlänge in den Betrachtungswinkel ($\theta_1$) maximal ist.

6. Sicherheitselement nach einem der vorhergehenden Ansprüche, bei dem die diffraktive Struktur (13) zumindest einen dritten Bereich (80, 81, 83, 84, 85) aufweist, der eine Information bereitstellt, die nur für einen in dem vorbestimmten Betrachtungswinkel ($\theta_1$) blickenden Betrachter erkennbar ist.

7. Sicherheitselement nach einem der vorhergehenden Ansprüche, bei dem die diffraktive Struktur in den zweiten oder in vierten Zonen als Beugungsgitter mit einer Spatialfrequenz von zwischen 3700 Linien/mm und 5000 Linien/mm, bevorzugt zwischen 4000 Linien/mm und 5000 Linien/mm ausgebildet ist.

8. Sicherheitselement nach einem der vorhergehenden Ansprüche, bei dem die erste Schicht eine Replizierlackschicht (12) aus einem thermoplastischen Material oder aus einem mittels UV-Strahlung härtbaren Material ist, wobei bevorzugt eine Reflexionsschicht (14) auf der Replizierlackschicht zumindest in Bereichen der diffraktiven Struktur (13) angeordnet ist, wobei besonders bevorzugt die Reflexionsschicht (14) eine dielelektrische Schicht ist, die einen Brechungsindex aufweist, der sich von dem Brechungsindex der Replizierlackschicht (12) um zumindest 0,2, bevorzugt zwischen 0,5 und 1,75 unterscheidet und die eine Dicke von zwischen 30 nm und 250 nm aufweist, sodass sich ein Farbeffekt als Beugungseffekt Nullter Ordnung in Richtung des Spiegelreflexes zeigt.

9. Sicherheitselement nach einem der vorhergehenden Ansprüche, bei dem die diffraktive Struktur (13) durch erste und/oder zweite und/oder dritte Bereiche ein erstes Bild bereitstellt und durch vierte Bereiche, die mit den ersten, zweiten und/oder dritten Bereichen verschachtelt sind, ein zweites Bild bereitstellt, das als Beugungsbild Erster Ordnung in einer anderen Orientierung des Sicherheitselements bzgl. einer Drehung in der Grundebene als das erste Bild zu sehen ist, wobei vorzugsweise zumindest alle Bereiche in zumindest einer in der Grundebene definierten Erstreckungsrichtung Abmessungen von kleiner als 300 $\mu$m, bevorzugt von zwischen 50 $\mu$m und 250 $\mu$m, bevorzugt von zwischen 75 $\mu$m und 150 $\mu$m, aufweisen und/oder bei dem die erste Schicht (12) eine Grobstruktur und eine mit dieser überlagerte Feinstruktur aufweist, wobei durch die Grobstruktur ein asymmetrisches Gitter in Sägezahnform bereitgestellt ist, das durch eine bzgl. der Grundebene flachere Flanke und eine bzgl. der Grundebene steilere Flanke in jeweiligen Gittereinheiten definiert ist, und wobei die Feinstruktur auf mehreren der flacheren Flanken verteilt angeordnet ist.

10. Sicherheitsdokument (2, 17), insbesondere Banknote, Passdokument, Personalausweis oder Karte, mit einem Sicherheitselement nach einem der vorhergehenden Ansprüche, wobei das Sicherheitsdokument bevorzugt ein Substrat (171) aufweist, in welches ein Polarisator (172) integriert ist, der in Richtung der diffraktiven Struktur faltbar ist und/oder wobei bevorzugt zumindest bereichsweise überlappend mit dem Sicherheitselement eine eine codierte Information bereitstellende Schicht vorgesehen ist.

11. Verfahren zur Herstellung eines Sicherheitselements mit den Schritten:

a) Bereitstellen eines Bildes als Vorlage,
b) Zerlegen des Bildes in Bildpunktelemente,
c) Erfassen zumindest eines Helligkeitswerts für jedes Bildpunktelement nach einem vorbestimmten Kriterium,
d) Bereitstellen der ersten Schicht derart, dass sie eine diffraktive Struktur bereitstellt, durch welche unter einem vorbestimmten Einfallswinkel zu einer Flächennormalen (F) einfallendes Licht gebeugt wird, sodass für einen in einem vorbestimmten Betrachtungswinkel ($\theta_1$) zur Flächennormalen (F) blickenden Betrachter (A) ein erstes Bild als Beugungsbild Erster Ordnung erscheint, wobei die Flächennormale (F) eine Normale zu einer durch die erste Schicht (12) definierten Grundebene ist, wobei die diffraktive Struktur (13) derart ausgebildet ist, dass der Betrachtungswinkel größer als 50°, bevorzugt größer als 60°, besonders bevorzugt größer als 70° ist, und wobei die diffraktive Struktur eine Mehrzahl von Bildpunktbereichen aufweist, die jeweils einem Bildpunktelement entsprechen und in dem ersten Bild Licht mit einer gemäß einem dem ersten Bildpunktelement zugehörigen Helligkeitswert definierten Helligkeit wiedergeben,

**dadurch gekennzeichnet, dass** das Verfahren zur Herstellung eines Sicherheitselements nach Anspruch 4 durchgeführt wird, wobei in Schritt a) des Verfahrens ein Farbbild bereitgestellt wird, in Schritt c) des Verfahrens auch ein Farbwert für jedes Bildpunktelement erfasst wird und in Schritt d) des Verfahrens in den jeweiligen Bildpunktbereichen (B1, B2, B3, B4) erste, zweite und/oder dritte Zonen (r', g', b') bereitgestellt werden, derart, dass die Bildpunktbereiche (B1, B2, B3, B4) als Beitrag zu dem Beugungsbild Erster Ordnung Licht mit einem gemäß dem entsprechenden Bildpunktelement zugehörigen Farbwert definierten Farbwert wiedergeben, der zumindest für einige Bildpunktbereiche durch additive Farbmischung erzeugt ist,

12. Verfahren nach Anspruch 11, bei dem beim Bereitstellen der ersten Schicht die ersten, zweiten und dritten Zonen jeweils als Beugungsgitter ausgebildet werden derart, dass dem Betrachter das erste Bild mit der selben absoluten Helligkeit und/oder den selben Kontrastverhältnissen erscheint wie die Vorlage.

13. Verfahren zur Herstellung eines Sicherheitselements nach Anspruch 11 oder 12, bei dem der Schritt a) des Verfahrens umfasst, dass das Bereitstellen einer ersten Schicht (12) mit einer diffraktiven Struktur (13) derart erfolgt, dass bei der Betrachtung der diffraktiven Struktur in Richtung einer Flächennormalen zu einer in der ersten Schicht definierten Grundebene die Vorlage verzerrt wiedergegeben wird, bei Betrachtung der diffraktiven Struktur (13) in einem vorbestimmten Betrachtungswinkel ($\theta_1$) und gleichzeitiger Beleuchtung in einem vorbestimmten Einfallswinkel ($\theta_{inc}$), aber unverzerrt als Beugungsbild Erster Ordnung wiedergegeben wird.

14. Verfahren nach einem der Ansprüche 11 bis 13, bei dem die Vorlage in Bildelemente eingeteilt wird und eine erste Transformationsfunktion analytisch oder numerisch ermittelt wird, welche angibt, wie die Bildelemente (Q) dem Betrachter erscheinen, wobei die Vorlage analytisch oder numerisch einer zweiten Transformationsfunktion unterworfen wird, die invers zu der ersten Transformationsfunktion ist, um die Verteilung von Teilbereichen der diffraktiven Struktur in der ersten Schicht (12) bildelementweise zu berechnen.

**Claims**

1. Security element (1), in particular in the form of a transfer film (1), a laminating film or a security thread, having one or more layers (12, 14, 15; 10), of which at least one first layer (12) provides a diffractive structure (13), using which incident light is diffracted at a predetermined angle of incidence ($\theta_{inc}$) to a surface normal (F), such that for an observer (A) looking at a predetermined observation angle ($\theta_1$) relative to the surface normal (F), a first image appears as a first order diffraction image, wherein the surface normal (F) is a normal to a base plane defined by the first layer (12), and wherein the diffractive structure (13) is formed in such a way that the predetermined observation angle is larger than 50°, preferably larger than 60°, particularly preferably larger than 70°, **characterised in that** the diffractive structure has one or more first zones and furthermore a) one or more second zones and/or b) one or more third zones, wherein the diffractive structure is formed in each first zone in such a way that it diffracts an allocated first wavelength of the incident light at the predetermined angle of incidence for the formation of the first order diffraction image at the predetermined observation angle ($\theta_1$), the diffractive structure in each second zone is formed in such a way that it diffracts an allocated second wavelength, which is different from the first wavelength, of the incident light at the predetermined angle of incidence ($\theta_{inc}$) for the formation of the first order diffraction image in the predetermined observation angle ($\theta_1$), and wherein the diffractive structure is formed in each third zone in such a way that it diffracts an allocated third wavelength, which is different from the first and second wavelength, of the incident light at the predetermined angle of incidence ($\theta_{inc}$) for the formation of the first order diffraction image at the predetermined observation angle ($\theta_1$), such that the first image appears to be multi-coloured.

2. Security element according to claim 1, in which the diffractive structure (13) is formed in such a way that the first order diffraction image appears at the observation angle ($\theta_1$) for a predetermined angle of incidence ($\theta_{inc}$) of greater than 30°, preferably between 40° and 50° and/or in which the observation angle ($\theta_1$) is different from an angle ($\theta_0$) at which the incident light at the predetermined angle of incidence ($\theta_{inc}$) is diffracted at the zeroth order, by an angular separation of at least 90°.

3. Security element according to claim 1 or 2, in which first regions (r, g, b, y) of the diffractive structure (13) comprise either exclusively at least one first zone (r) or exclusively at least one second zone (g) or exclusively at least one third zone (b), and wherein the first partial regions in all extension directions defined in the base plane have a dimension of greater than $300\mu m$, preferably greater than $500\mu m$, particularly greater than $800\mu m$.

4. Security element according to one of the preceding claims, in which one or more second regions of the diffractive structure (13) have a plurality of pixel regions (B1, B2, B3, B4), which have dimensions of the grid width of smaller than $300\mu m$, preferably of between $50\mu m$ and $250\mu m$, particularly preferably from $75\mu m$ to $150\mu m$ in at least one extension direction defined in the base plane, wherein at least one of the pixel regions (B1, B2, B3, B4) comprises at least two different zones (r', g', b') of first and/or second and/or third zones, in such a way that the light of the wavelengths allocated to the at least two different zones (r', g', b') mixes in an additive manner and a colour impression of the respective pixel region determined by the additive mixture results for the observer.

5. Security element according to claim 4, in which the diffractive structure of each of the zones (r, g, b, r', g', b') is formed as a diffraction grating which is determined by one or more grating parameters which are constant within the zone, from the group of spatial frequency, azimuth angle, relief shape and relief depth, wherein one or more of the following measures is preferably provided:

   a) that the diffraction grating comprises:

   - a linear grating and/or
   - a wavy grating and/or
   - a parallel line grating and/or
   - a cross grating having a different spatial frequency in different directions and/or
   - a cross grating having the same spatial frequency in directions which are perpendicular to one another and/or
   - a circular grating,

   b) that all grating parameters are constant within each respective zone,
   c) that the relief depth of the diffraction grating defined in the direction of the surface normal is selected depending on the respective wavelength allocated to the zone, in such a way that the diffraction efficiency of the diffraction of light of this wavelength is at a maximum at the observation angle ($\theta_1$).

6. Security element according to one of the preceding claims, in which the diffractive structure (13) has at least one third region (80, 81, 83, 84, 85) which provides a piece of information which is only recognisable for an observer looking at the predetermined observation angle ($\theta_1$).

7. Security element according to one of the preceding claims, in which the diffractive structure in the second or fourth zones is formed as a diffraction grating having a spatial frequency of between 3700 lines/mm and 5000 lines/mm, preferably between 4000 lines/mm and 5000 lines/mm.

8. Security element according to one of the preceding claims, in which the first layer is a replicating lacquer layer (12) made from a thermoplastic material or from a material which is able to hardened by means of UV radiation, wherein a reflective layer (14) is preferably arranged on the replicating lacquer layer at least in regions of the diffractive structure (13), wherein, particularly preferably, the reflective layer (14) is a dielectric layer which has a refractive index which differs from the refractive index of the replicating lacquer layer (12) by at least 0.2, preferably between 0.5 and 1.75, and which has a thickness of between 30nm and 250nm, such that a colour effect is shown as a zeroth order diffraction effect in the direction of the mirror reflex.

9.  Security element according to one of the preceding claims, in which the diffractive structure (13) provides a first image through first and/or second and/or third regions and provides a second image through fourth regions which are interleaved with the first, second and/or third regions, said second image being seen as a first order diffraction image in a different orientation of the security element with regard to a rotation in the base plane from the first image, wherein at least all regionsin at least one extension direction defined in the base planepreferably have dimensions of smaller than 300μm, preferably of between 50μm and 250μm, preferably of between 75μm and 150μm, and/or in which the first layer (12) has a coarse structure and a fine structure which is superimposed with this, wherein an asymmetrical grating is provided in sawtooth form, which is defined by an edge which is flatter with regard to the base plane and an edge which is steeper with regard to the base plane in respective grating units, and wherein the fine structure is arranged to be distributed on several of the flatteredges.

10. Security document (2, 17), in particular banknote, passport document, identity document or card, having a security element according to one of the preceding claims, wherein the security document preferably has a substrate (171) into which a polariser (172) is integrated which is foldable in the direction of the diffractive structure, and/or wherein a layer which provides a coded piece of information ispreferably provided to be overlapping with the security element at least in regions.

11. Method for producing a security element having the steps:

    a) providing an image as a template,
    b) breaking the image down into pixel elements,
    c) detecting at least one brightness value for each pixel element according to a predetermined criterion,
    d) providing the first layer in such a way that it provides a diffractive structure, using which incident light at a predetermined angle of incidence to a surface normal (F) is diffracted, such that for an observer(A) looking at a predetermined observation angle ($\theta_1$) relative to the surface normal (F), a first image appears as a first order diffraction image, wherein the surface normal (F) is a normal to a base plane defined by the first layer (12), wherein the diffractive structure (13) is formed in such a way that the observation angle is greater than 50°, preferably greater than 60°, particularly preferably greater than 70°, and wherein the diffractive structure has a plurality of pixel regions which each correspond to a pixel element and, in the first image, reflect light having a brightness defined according to a brightness value allocated to the first pixel element,

    **characterised in that** the method for producing a security element according to claim 4 is carried out, wherein in step a) of the method, a colour image is provided, in step c) of the method, a colour value for each pixel element is also detected and in step d) of the method, first, second and/or third zones (r', g', b') are provided in the respective pixel regions (B1, B2, B3, B4) in such a way that the image regions (B1, B2, B3, B4) reflect light having a colour value defined according to the colour value allocated to the corresponding pixel element as a contribution to the first order diffraction image, said colour value being generated at least for some pixel regions by additive colour mixing.

12. Method according to claim 11, in which in the provision of the first layer, the first, second and third zones are each formed as diffraction gratings, in such a way that the first image, having the same absolute brightness and/or the same contrast ratios as the template appears to the observer.

13. Method for producing a security element according to claim 11 or 12, in which step a) of the method comprises that the provision of a first layer (12) with a diffractive structure (13) occurs in such a way that the template is reflected to be distorted in the observation of the diffractive structure in the direction of a surface normal to a base plane defined in the first layer,but is reflected to be undistorted as a first order diffraction image in the observation of the diffractive structure (13) at a predetermined observation angle ($\theta_1$) and simultaneous illumination at a predetermined angle of incidence ($\theta_{inc}$).

14. Method according to one of claims 11 to 13, in which the template is divided into image elements and a first transformation function is determined analytically or numerically, which specifies how the image elements (Q) appear to the observer, wherein the template is subjected analytically or numerically to a second transformation function which is inverse to the first transformation function, in order to calculate the distribution of partial regions of the diffractive structure in the first layer (12) in terms of image elements.

**EP 2 676 802 B1**

**Revendications**

1.  Elément de sécurité (1), se présentant en particulier sous la forme d'un film de transfert (1), d'un film stratifié ou d'un fil de sécurité, comprenant une ou plusieurs couches (12, 14, 15 ; 10), parmi lesquelles au moins une première couche (12) fournit une structure diffractive (13), par laquelle de la lumière incidente est diffractée selon un angle d'incidence ($\theta_{inc}$) préalablement déterminé par rapport à une normale à la surface (F) de sorte qu'une première image apparaît sous la forme d'une image de diffraction de premier ordre à un observateur (A) regardant selon un angle d'observation ($\theta_1$) préalablement déterminé par rapport à la normale à la surface (F), sachant que la normale à la surface (F) est une normale par rapport à un plan de base défini par la première couche (12), et sachant que la structure diffractive (13) est réalisée de telle manière que l'angle d'observation préalablement déterminé est supérieur à 50°, de manière préférée supérieur à 60°, de manière particulièrement préférée supérieur à 70°, **caractérisé en ce que** la structure diffractive présente une ou plusieurs premières zones et en outre a) une ou plusieurs deuxièmes zones et/ou b) une ou plusieurs troisièmes zones, sachant que la structure diffractive est réalisée dans chaque première zone de telle manière qu'elle diffracte une première longueur d'onde associée de la lumière incidente selon l'angle d'incidence préalablement déterminé afin de réaliser l'image de diffraction de premier ordre selon l'angle d'observation ($\theta_1$) préalablement déterminé, que la structure diffractive est réalisée dans chaque deuxième zone de telle manière qu'elle diffracte une deuxième longueur d'onde associée, différente de la première longueur d'onde, de la lumière incidente selon l'angle d'incidence ($\theta_{inc}$) préalablement déterminé afin de réaliser l'image de diffraction de premier ordre selon l'angle d'observation ($\theta_1$) préalablement déterminé et sachant que la structure diffractive est réalisée dans chaque troisième zone de telle manière qu'elle diffracte une troisième longueur d'onde associée, différente de la première et de la deuxième longueur d'onde, de la lumière incidente selon l'angle d'incidence ($\theta_{inc}$) préalablement déterminé afin de réaliser l'image de diffraction de premier ordre selon l'angle d'observation ($\theta_1$) préalablement déterminé de telle sorte que la première image apparaît sous forme multicolore.

2.  Elément de sécurité selon la revendication 1, dans le cadre duquel la structure diffractive (13) est réalisée de telle manière que l'image de diffraction de premier ordre apparaît selon l'angle d'observation ($\theta_1$), dans le cas d'un angle d'incidence ($\theta_{inc}$) préalablement déterminé supérieur à 30°, de manière préférée compris entre 40° et 50°, et/ou dans le cadre duquel l'angle d'observation ($\theta_1$) diffère d'un angle ($\theta_0$), selon lequel la lumière incidente selon l'angle d'incidence ($\theta_{inc}$) préalablement déterminé est diffractée dans l'ordre zéro, d'un écart angulaire d'au moins 90°.

3.  Elément de sécurité selon la revendication 1 ou 2, dans le cadre duquel des premières régions (r, g, b, y) de la structure diffractive (13) comprennent soit exclusivement au moins une première zone (r) ou exclusivement au moins une deuxième zone (g) ou exclusivement au moins une troisième zone (b), et sachant que les premières régions partielles présentent, dans toutes les directions d'extension définies dans le plan de base, une dimension supérieure à 300 $\mu$m, de manière préférée supérieure à 500 $\mu$m, de manière particulièrement préférée supérieure à 800 $\mu$m.

4.  Elément de sécurité selon l'une quelconque des revendications précédentes, dans le cadre duquel une ou plusieurs deuxièmes régions de la structure diffractives (13) présentent une pluralité de régions de pixels (B1, B2, B3, B4), qui présentent, dans au moins une direction d'extension définie dans le plan de base, des dimensions de trame inférieures à 300 $\mu$m, de manière préférée comprises entre 50 $\mu$m et 250 $\mu$m, de manière particulièrement préférée allant de 75 $\mu$m à 150 $\mu$m, sachant qu'au moins une des régions de pixels (B1, B2, B3, B4) comprend au moins deux zones (r', g', b') différentes des premières et/ou deuxièmes et/ou troisièmes zones de telle manière que la lumière des longueurs d'ondes associées aux deux zones (r', g', b') ou plus différentes se mélange par addition et que cela donne lieu pour l'observateur à une impression de couleur déterminée par le mélange par addition de chaque région de pixels.

5.  Elément de sécurité selon la revendication 4, dans le cadre duquel la structure diffractive de chacune des zones (r, g, b, r', g', b') est réalisée sous la forme d'un réseau de diffraction, qui est déterminé par un ou plusieurs paramètres de réseau constants à l'intérieur de la zone issus du groupe comprenant la fréquence spatiale, l'angle azimutal, la forme en relief et la profondeur de relief, sachant que de manière préférée une ou plusieurs des mesures qui suivent sont prévues :

    a) le réseau de diffraction comprend :

      - un réseau linéaire et/ou
      - un réseau en forme de serpentin et/ou
      - un réseau en forme de parabole et/ou

**23**

- un réseau croisé présentant une fréquence spatiale différente dans différentes directions et/ou
- un réseau croisé présentant une fréquence spatiale identique dans des directions perpendiculaires les unes aux autres, et/ou
- un réseau circulaire,

b) tous les paramètres de réseau sont respectivement constants à l'intérieur de chaque zone,
c) la profondeur de relief, définie dans la direction de la normale à la surface, des réseaux de diffraction est choisie en fonction de la longueur d'onde respective, associée à la zone de telle manière que l'efficacité de la diffraction de la lumière de ladite longueur d'onde est maximale dans l'angle d'observation ($\theta_1$) .

6. Elément de sécurité selon l'une quelconque des revendications précédentes, dans le cadre duquel la structure diffractive (13) présente au moins une troisième région (80, 81, 83, 84, 85), qui fournit une information, qui peut être identifiée uniquement par un observateur regardant selon l'angle d'observation ($\theta_1$) préalablement déterminé.

7. Elément de sécurité selon l'une quelconque des revendications précédentes, dans le cadre duquel la structure diffractive est réalisée dans les deuxièmes ou dans les quatrièmes zones sous la forme d'un réseau de diffraction présentant une fréquence spatiale comprise entre 3700 lignes/mm et 5000 lignes/mm, de manière préférée entre 4000 lignes/mm et 5000 lignes/mm.

8. Elément de sécurité selon l'une quelconque des revendications précédentes, dans le cadre duquel la première couche est une couche de vernis de réplication (12) composée d'un matériau thermoplastique ou d'un matériau durcissable au moyen d'un rayonnement UV, sachant qu'une couche de réflexion (14) est de manière préférée disposée sur la couche de vernis de réplication au moins dans des régions de la structure diffractive (13), sachant que de manière particulièrement préférée la couche de réflexion (14) est une couche diélectrique, qui présente un indice de réfaction qui diffère de l'indice de réfraction de la couche de vernis de réplication (12) d'une valeur au moins de 0,2, de manière préférée comprise entre 0,5 et 1,75 et qui présente une épaisseur comprise entre 30 nm et 250 nm, de sorte qu'un effet coloré apparaît comme effet de diffraction d'ordre zéro dans la direction du réflex à miroir.

9. Elément de sécurité selon l'une quelconque des revendications précédentes, dans le cadre duquel la structure diffractive (13) fournit, par des premières et/ou deuxièmes et/ou troisièmes zones, une première image, et offre, par des quatrièmes zones, qui sont compartimentées avec les premières, deuxièmes et/ou troisièmes zones, une deuxième image, qui est à considérer comme une image de diffraction de premier ordre selon une orientation autre de l'élément de sécurité en terme de rotation dans le plan de base par rapport à la première image, sachant que de préférence au moins toutes les zones présentent, dans au moins une direction d'extension définie dans le plan de base, des dimensions inférieures à 300 $\mu$m, de manière préférée comprises entre 50 $\mu$m et 250 $\mu$m, de manière préférée comprises entre 75 $\mu$m et 150 $\mu$m et/ou dans le cadre duquel la première couche (12) présente une structure épaisse et une structure fine superposée sur cette dernière, sachant qu'un réseau asymétrique en forme de dent de scie est fourni par la structure épaisse, lequel est défini, dans des unités de réseau respectives, par un flanc plus plat par rapport au plan de base et par un flanc plus raide par rapport au plan de base, et sachant que la structure fine est disposée de manière répartie sur plusieurs des flancs plus plats.

10. Document de sécurité (2, 17), en particulier billet de banque, passeport, carte d'identité ou carte, comprenant un élément de sécurité selon l'une quelconque des revendications précédentes, sachant que le document de sécurité présente de manière préférée un substrat (171), dans lequel un polarisateur (172) est intégré, lequel peut être plié dans la direction de la structure diffractive et/ou sachant que de manière préférée une couche fournissant une information codée est prévue au moins par endroits de manière à se superposer à l'élément de sécurité.

11. Procédé servant à fabriquer un élément de sécurité comprenant les étapes suivantes consistant à :

a) fournir une image comme base ;
b) décomposer l'image en pixels ;
c) détecter au moins une valeur de clarté pour chaque pixel selon un critère préalablement déterminé ;
d) fournir la première couche de telle manière qu'elle fournit une structure diffractive, par laquelle de la lumière incidente selon un angle d'incidence préalablement déterminé par rapport à une normale à la surface (F) est diffractée de sorte qu'une première image apparaît sous la forme d'une image de diffraction de premier ordre à un observateur (A) regardant selon un angle d'observation ($\theta_1$) préalablement déterminé par rapport à la normale à la surface (F), sachant que la normale à la surface (F) est une normale par rapport à un plan de base défini par la première couche (12), sachant que la structure diffractive (13) est réalisée de telle manière que l'angle d'observation est supérieur à 50°, de préférence est supérieur à 60°, de manière particulièrement préférée est supérieur à 70°, et sachant que la structure diffractive présente une pluralité de zones de pixels, qui correspondent respectivement à un pixel et qui reproduisent dans la première image la lumière avec une clarté définie conformément à une valeur de clarté relevant du premier pixel,

**caractérisé en ce que** le procédé est mis en oeuvre afin de fabriquer un élément de sécurité selon la revendication 4, sachant qu'une image en couleur est fournie à l'étape a) du procédé, qu'une valeur de couleur pour chaque pixel est également détectée à l'étape c) du procédé et que des premières, deuxièmes et/ou troisièmes zones (r', g', b') sont fournies à l'étape d) du procédé dans les régions de pixels (B1, B2, B3, B4) respectives de telle manière que les régions de pixels (B1, B2, B3, B4) reproduisent, en tant que contribution à l'image de diffraction de premier ordre, la lumière présentant une valeur de couleur définie selon une valeur de couleur relevant du pixel correspondant, laquelle valeur de couleur est produite, au moins pour quelques régions de pixels, par mélange de couleur par addition.

12. Procédé selon la revendication 11, dans le cadre duquel les premières, deuxièmes et troisièmes zones sont réalisées respectivement sous la forme de réseaux de diffraction lorsque la première couche est fournie de telle manière que la première image apparaît à l'observateur avec la même clarté absolue et/ou avec les mêmes taux de contraste que la base.

13. Procédé servant à fabriquer un élément de sécurité selon la revendication 11 ou 12, dans le cadre duquel l'étape a) du procédé comprend la mise à disposition d'une première couche (12) présentant une structure diffractive (13) de telle manière que, lors de l'observation de la structure diffractive dans la direction d'une normale à la surface par rapport à un plan de base défini dans la première couche, la base est reproduite de manière déformée, que, lors de l'observation de la structure diffractive (13) selon un angle d'observation ($\theta_1$) préalablement déterminé et sous un éclairage simultané selon un angle d'incidence ($\theta_{inc}$) préalablement déterminé, elle est reproduite toutefois de manière non déformée sous la forme d'une image de diffraction de premier ordre.

14. Procédé selon l'une quelconque des revendications 11 à 13, dans le cadre duquel la base est divisée en éléments d'image et une première fonction de transformation est déterminée de manière analytique ou numérique, laquelle indique la manière selon laquelle les éléments d'image (S) apparaissent à l'observateur, sachant que la base est soumise à une deuxième fonction de transformation de manière analytique ou numérique, laquelle est l'inverse de la première fonction de transformation afin de calculer la répartition de régions partielles de la structure diffractive dans la première couche (12) élément d'image par élément d'image.

Fig. 1a

Fig. 1b

Fig. 5

Fig. 2

Fig. 3

Fig 4

Fig. 6a

$d_r = 387$ nm

Fig. 6b

$d_g = 330$ nm

Fig. 6c

$d_b = 275$ nm

EP 2 676 802 B1

Fig. 6 d

EP 2 676 802 B1

Fig. 6e

d=250 nm, λ=413 nm

Fig. 7a

d=275 nm, λ=455 nm

Fig. 7b

d=330 nm, λ=545 nm

Fig. 7c

Beugungskoeffizient

Tiefe [μm]

d=378 nm, λ=640 nm

Fig. 7d

Fig. 8a

Fig. 8b

Fig. 8c

Fig. 8d

71°

$\ell$

$\mathscr{L}$

Fig. 9a

STOP

$\mathscr{L}$

STOP

$\ell$

Fig. 9b

Fig. 9c

Fig. 10 a

Fig. 10 b

Fig. 11 a

Fig. 11 b

0°     90°

Fig. 13a

Fig. 13b

Fig. 13c

Fig. 12

Fig. 14a

Fig. 14b

h=150nm ⊡ ~~~~~~~~~ ZnS, w=75nm
n=1,5  13
n=1,5  14

d=387nm

Fig 15

Leistung

TE

TM

Wellenlänge $[10^2 nm]$

Fig. 16

Fig. 17a

Fig. 17b

$90° - 71° = 19°$

Fig. 17c

**IN DER BESCHREIBUNG AUFGEFÜHRTE DOKUMENTE**

**In der Beschreibung aufgeführte Patentdokumente**

- DE 102007063275 A1